# EUROPÄISCHE PATENTSCHRIFT

(11) **EP 1 187 243 B1**
(45) Veröffentlichungstag und Bekanntmachung des Hinweises auf die Patenterteilung: **25.08.2010**
(21) Anmeldenummer: 01121313.9
(22) Anmeldetag: 06.09.2001
(51) Int. Cl.: H01M 8/02, H01M 8/24

(54) **Brennstoffzelleneinheit, Brennstoffzellenblockverbund und Verfahren zum Herstellen eines Brennstoffzellenblockverbunds**
Fuel cell unit, fuel cell stack assembly and method of manufacturing a fuel cell stack assembly
Unité de pile à combustible, assemblage d'un empilage de piles à combustible et procédé de fabrication d'un assemblage d'un empilage de piles à combustible

(30) Priorität: 09.09.2000 DE 10044703
(43) Veröffentlichungstag der Anmeldung: 13.03.2002
(60) Teilanmeldung: 04024895.7
(73) Patentinhaber: ElringKlinger AG, 72581 Dettingen (DE)
(72) Erfinder: Diez, Armin, 73252 Lenningen (DE)
(74) Vertreter: Hoeger, Stellrecht & Partner Patentanwälte

(56) Entgegenhaltungen:
- EP-A- 0 907 215
- WO-A-98/35398
- DE-A- 4 016 157
- US-A- 4 942 099
- US-A- 5 077 148
- US-A- 5 942 348

## Beschreibung

Die vorliegende Erfindung betrifft eine Brennstoffzelleneinheit, die eine Kathoden-Anoden-Elektrolyt-Einheit und eine Kontaktplatte, die mit der Kathoden-Anoden-Elektrolyt-Einheit (KAE-Einheit) in elektrisch leitendem Kontakt steht, umfaßt.

Solche Brennstoffzelleneinheiten sind aus dem Stand der Technik bekannt.

In der Regel werden mehrere solcher Brennstoffzelleneinheiten zu einem Brennstoffzellenblockverbund zusammengefaßt, in welchem die Brennstoffzelleneinheiten längs einer Stapelrichtung aufeinanderfolgen.

In der Kathoden-Anoden-Elektrolyt-Einheit läuft im Betrieb der Brennstoffzelleneinheit eine elektrochemische Reaktion ab, in deren Verlauf der Anode der KAE-Einheit Elektronen zugeführt und der Kathode der KAE-Einheit zur Ionisierung von Sauerstoffatomen Elektronen entnommen werden. Die zwischen den KAE-Einheiten zweier aufeinanderfolgender Brennstoffzelleneinheiten angeordneten Kontaktplatten dienen dem Ladungsausgleich zwischen der Kathode der einen Brennstoffzelleneinheit und der Anode der benachbarten Brennstoffzelleneinheit, um der Kathode die zur Ionisierung benötigten Elektronen zuzuführen. Von den randständigen Kontaktplatten des Brennstoffzellenblockverbunds können elektrische Ladungen abgegriffen werden, um sie einem externen Nutz-Stromkreislauf zuzuführen.

Die bei den bekannten Brennstoffzelleneinheiten verwendeten Kontaktplatten sind aus dem Vollen gefräste oder erodierte Metallplatten, zwischen die die KAE-Einheiten eingefügt werden, so dass diese Kontaktplatten zugleich auch der Halterung der KAE-Einheiten dienen. Ferner sind diese Platten mit Kanälen versehen, die der Durchleitung von Fluiden (Brenngas, Oxidationsmittel und/oder Kühlmittel) durch die Brennstoffzelleneinheit dienen.

Diese bekannten Brennstoffzelleneinheiten sind sehr aufwendig in der Herstellung und somit nur für kleine Stückzahlen geeignet.

Die US-A-5 077 148 offenbart eine Brennstoffzelleneinheit gemäß dem Oberbegriff von Anspruch 1.

Der vorliegenden Erfindung liegt die Aufgabe zugrunde, eine Brennstoffzelleneinheit der eingangs genannten Art zu schaffen, welche nur einen geringen Herstellungsaufwand erfordert und somit für die Großserienproduktion geeignet ist.

Diese Aufgabe wird durch eine Brennstoffzelleneinheit nach Anspruch 1 gelöst.

Ein Blechformteil kann durch einen oder mehrere Umformvorgänge, insbesondere durch Prägen und/oder Tiefziehen, aus einem im wesentlichen ebenen Blechzuschnitt hergestellt werden. Diese Herstellungsverfahren sind für eine Großserienproduktion weitaus geeigneter und kostengünstiger als die Herstellung massiver Metallplatten durch Fräsen oder Erodieren.

Außerdem kann durch die Verwendung von Blechformteilen eine Material- und Gewichtseinsparung erzielt werden.

Das den Fluidraum durchströmende Fluid kann ein Brenngas, ein Oxidationsmittel oder ein Kühlmittel sein.

Der Fluidraum wird außer von dem Fluidführungselement von der Kontaktplatte und von der Kathoden-Anoden-Elektrolyt-Einheit umschlossen.

Bei der Erfindung ist vorgesehen, dass die Kathoden-Anoden-Elektrolyt-Einheit der Brennstoffzelleneinheit an dem Fluidführungselement angeordnet ist.

Insbesondere kann vorgesehen sein, dass die Kathoden-Anoden-Elektrolyt-Einheit zwischen dem Fluidführungselement einerseits und der Kontaktplatte derselben Brennstoffzelleneinheit oder einer benachbarten Brennstoffzelleneinheit andererseits angeordnet ist.

Die erfindungsgemäße Brennstoffzelleneinheit ist bereits vor der Montage des Brennstoffzellenblockverbunds besonders einfach handhabbar, wenn die Kathoden-Anoden-Elektrolyt-Einheit zwischen dem Fluidführungselement und der Kontaktplatte derselben Brennstoffzelleneinheit gehalten ist.

Alternativ hierzu kann auch vorgesehen sein, dass die Kathoden-Anoden-Elektrolyt-Einheit als Beschichtung an dem Fluidführungselement oder an der Kontaktplatte der Brennstoffzelleneinheit ausgebildet ist.

Besonders günstig ist es, wenn nicht nur das Fluidführungselement, sondern auch die Kontaktplatte als Blechformteil ausgebildet ist. In diesem Falle läßt sich auch die Kontaktplatte der Brennstoffzelleneinheit in einfacher Weise durch Prägen und/oder Tiefziehen aus einem im wesentlichen ebenen Blechzuschnitt herstellen, was für eine Großserienproduktion geeigneter und kostengünstiger ist als die Herstellung massever Kontaktplatten durch Fräsen oder Erodieren.

Die Kontaktplatte und das Fluidführungselement können in diesem Fall eine zweiteilige Schale der Brennstoffzelleneinheit bilden, welche die Kathoden-Anoden-Elektrolyt-Einheit umschließt.

Der erfindungsgemäße Aufbau einer Brennstoffzelleneinheit eignet sich insbesondere für sogenannte Hochtemperatur-Brennstoffzelleneinheiten, die eine Betriebstemperatur von bis zu 950°C aufweisen und ohne externen Reformer direkt mit einem kohlenwasserstoffhaltigen Brenngas wie beispielsweise Methan oder Erdgas oder alternativ hierzu, unter Verwendung eines externen Reformers, mit einem Diesel- oder Benzinkraftstoff betrieben werden können.

Zur Verwendung in einer solchen Hochtemperatur-Brennstoffzelleneinheit werden die Blechformteile, aus denen das Fluidführungselement und gegebenenfalls auch die Kontaktplatte der Brennstoffzelleneinheit gebildet werden, aus einem Blechmaterial hergestellt, das bei den auftretenden Temperaturen von bis zu 950°C chemisch beständig gegenüber den Bestandteilen des Brenngases, der zugeführten Verbrennungsluft und eines gegebenenfalls zugeführten Kühlmittels (beispielsweise Kühlluft) chemisch beständig ist.

Besonders geeignet hierfür sind hochtemperaturbeständige Edelstahlbleche oder mit einem anorganischen oder keramischen Material beschichtete Stahlbleche.

Ferner wird vorzugsweise ein Blechmaterial gewählt, dessen thermischer Ausdehnungskoeffizient mit dem der KAE-Einheit kompatibel ist.

Die Stärke des verwendeten Blechmaterials beträgt vorzugsweise höchstens ungefähr 3 mm, insbesondere höchstens ungefähr 1 mm.

Um eine zuverlässige, auch bei hohen Temperaturen beständige und gasdichte Verbindung zwischen der Kontaktplatte und dem Fluidführungselement derselben Brennstoffzelleneinheit zu erzielen, ist vorgesehen, dass das Fluidführungselement und die Kontaktplatte durch Verschweißung, vorzugsweise durch Laserverschweißung oder durch Elektronenstrahlverschweißung, oder durch Lötung, vorzugsweise durch Hartlötung, miteinander verbunden sind.

Um in einfacher Weise den erforderlichen Ladungsausgleich zwischen den KAE-Einheiten einander benachbarter Brennstoffzelleneinheiten zu ermöglichen, ist bei einer bevorzugten Ausgestaltung der erfindungsgemäßen Brennstoffzelleneinheit vorgesehen, daß das Fluidführungselement eine Durchtrittsöffnung für den Durchtritt von Kontaktelementen (z.B. einer benachbarten Brennstoffzelleneinheit) zu der Kathoden-Anoden-Elektrolyt-Einheit aufweist.

Um die KAE-Einheit zwischen dem Fluidführungselement und dem Kontaktelement der Brennstoffzelleneinheit halten zu können, ohne die Anode und die Kathode derselben Brennstoffzelleneinheit miteinander kurzzuschließen, ist vorteilhafterweise vorgesehen, daß das Fluidführungselement über eine elektrisch isolierende Dichtung an der Kathoden-Anoden-Elektrolyt-Einheit anliegt.

Bei einer bevorzugten Ausgestaltung der Erfindung ist das Fluidführungselement als Fluidführungsrahmen ausgebildet, welcher längs des gesamten Randes der Kathoden-Anoden-Elektrolyt-Einheit über die elektrisch isolierende Dichtung an derselben anliegt.

Besonders günstig ist es, wenn die Dichtung zwischen dem Fluidführungselement und der KAE-Einheit Glimmer umfaßt.

Alternativ oder ergänzend hierzu kann vorgesehen sein, daß die Dichtung zwischen der KAE-Einheit und dem Fluidführungselement eine Flachdichtung umfaßt.

Alternativ oder ergänzend hierzu kann vorgesehen sein, daß die Dichtung zwischen der KAE-Einheit und dem Fluidführungselement eine Beschichtung an dem Fluidführungselement und/oder an der Kathoden-Anoden-Elektrolyt-Einheit umfaßt.

Eine solche Beschichtung kann beispielsweise im Siebdruckverfahren, durch Walzenbeschichtung oder durch Spraybeschichtung auf das Fluidführungselement bzw. die Kathoden-Anoden-Elektrolyt-Einheit aufgebracht werden.

Zur Abdichtung kommen insbesondere anorganische und keramische Dichtmedien in Betracht, die bei einer Betriebstemperatur von bis zu 950°C chemisch beständig, gasdicht und elektrisch isolierend sind.

Als Dichtmedium kann beispielsweise ein Glaslot verwendet werden, welches beispielsweise wie ein aus der EP 0 907 215 A1 bekanntes Glaslot zusammengesetzt sein kann, das heißt 11 bis 13 Gewichts-% Aluminiumoxid (Al₂O₃), 10 bis 14 Gewichts-% Boroxid (BO₂), etwa 5 Gewichts-% Kalziumoxid (CaO), 23 bis 26 Gewichts-% Bariumoxid (BaO) und etwa 50 Gewichts-% Siliziumoxid (SiO₂) enthalten kann.

Ferner kann vorgesehen sein, daß die Dichtung zwischen der KAE-Einheit und dem Fluidführungselement als bewegliche Abdichtung (Schiebesitzabdichtung) ausgebildet ist.

Ferner kann vorgesehen sein, daß das Fluidführungselement mit der KAE-Einheit durch Umbördelung verbunden ist.

Insbesondere kann vorgesehen sein, daß an dem Fluidführungselement ein die KAE-Einheit umgreifender Bördelfalzbereich ausgebildet ist.

Um die erforderliche Preßkraft für die Abdichtung zwischen der KAE-Einheit und dem Fluidführungselement unabhängig von einer äußeren Verspannung der Brennstoffzelleneinheiten gegeneinander zu erhalten, ist vorzugsweise vorgesehen, dass die Kathoden-Anoden-Elektrolyt-Einheit und das Fluidführungselement bereits aufgrund der Geometrie der Brennstoffzelleneinheit und der Verbindung zwischen dem Fluidführungselement und der Kontaktplatte der Brennstoffzelleneinheit elastisch gegeneinander vorgespannt sind.

Um das Fluidführungselement außer zum Halten der KAE-Einheit auch zur Bildung von Fluidkanälen nutzen zu können, durch welche ein Fluid der Brennstoffzelleneinheit zugeführt oder aus derselben abgeführt wird, ist bei der Erfindung vorgesehen, dass das Fluidführungselement mit mindestens einer Fluiddurchgangsöffnung versehen ist.

Der die Fluiddurchgangsöffnung umgebende Bereich des Fluidführungselements dient in diesem Fall als Fluidführungsbereich des Fluidführungselements. Aus den Fluidführungsbereichen der Fluidführungselemente in der Stapelrichtung aufeinanderfolgender Brennstoffzelleneinheiten ergibt sich dann ein Fluidkanal.

Das durch den Fluidkanal zugeführte oder abgeführte Fluid kann ein Oxidationsmittel oder, vorzugsweise, ein Brenngas sein.

Besonders günstig ist es, wenn das Haltemittel mit einer Fluidzuführkanalöffnung und mit einer Fluidabführkanalöffnung versehen ist. In diesem Fall kann das Fluidführungselement sowohl zur Bildung eines Fluidzuführkanals als auch zur Bildung eines Fluidabführkanals verwendet werden.

Um bei der Bildung solcher Fluidkanäle die erforderliche elektrische Isolation zwischen den Kontaktplatten und Fluidführungselementen einander benachbarter Brennstoffzelleneinheiten aufrechtzuerhalten, ist vorteilhafterweise vorgesehen, daß die Brennstoffzelleneinheit eine elektrisch isolierende Fluidkanaldichtung umfaßt, über welche die Kontaktplatte der Brennstoffzelleneinheit an dem Fluidführungselement einer benachbarten Brennstoffzelleneinheit anliegt.

Alternativ oder ergänzend hierzu kann auch vorgesehen sein, daß die Brennstoffzelleneinheit eine Fluidkanaldichtung umfaßt, über welche das Fluidführungselement der Brennstoffzelleneinheit an der Kontaktplatte einer benachbarten Brennstoffzelleneinheit anliegt.

Eine solche Fluidkanaldichtung kann beispielsweise eine Beschichtung an dem Fluidführungselement und/oder an der Kontaktplatte umfassen.

Eine solche Beschichtung kann insbesondere im Siebdruckverfahren, durch Walzenbeschichtung oder Spraybeschichtung auf das Fluidführungselement bzw. die Kontaktplatte aufgebracht werden.

Als Abdichtmedien kommen insbesondere anorganische und keramische Materialien in Betracht, die bei den auftretenden Betriebstemperaturen von bis zu 950°C chemisch beständig, gasdicht und elektrisch isolierend sind.

Ein besonders einfacher Aufbau der Fluidkanaldichtung ergibt sich, wenn dieselbe eine Flachdichtung umfaßt.

Insbesondere dann, wenn die Halteplatte und die Kontaktplatte durch Umbördelung miteinander verbunden sind, ist es von Vorteil, wenn die Fluidkanaldichtung mindestens zwei separate Dichtungselemente umfasst, die insbesondere in verschiedenen Ebenen angeordnet sein können.

Um unterschiedliche Wärmedehnungen auszugleichen, ist es besonders günstig, wenn die Fluidkanaldichtung eine Schiebesitzabdichtung umfasst.

Insbesondere bei einer Ausgestaltung als Schiebesitzabdichtung ist es von Vorteil, wenn die Fluidkanaldichtung ein bei der Betriebstemperatur der Brennstoffzelleneinheit zähflüssiges Material, vorzugsweise ein Glaslot, umfasst.

Anspruch 19 ist auf einen Brennstoffzellenblockverbund gerichtet, welcher eine Mehrzahl von erfindungsgemäßen Brennstoffzelleneinheiten umfasst, die längs einer Stapelrichtung aufeinanderfolgen.

Um die einzelnen Brennstoffzelleneinheiten des Brennstoffzellenblockverbundes in ihrer Lage relativ zueinander fixieren zu können und erforderlichenfalls einen ausreichenden Anpressdruck für die Abdichtung zwischen der KAE-Einheit und dem Fluidführungselement und/oder für die Abdichtung zwischen dem Fluidführungselement und der Kontaktplatte einer benachbarten Brennstoffzelleneinheit erzeugen zu können, ist es günstig, wenn der Brennstoffzellenblockverbund mindestens ein Spannelement zum Verspannen der Brennstoffzelleneinheiten gegeneinander umfasst.

Insbesondere kann der Brennstoffzellenblockverbund zwei Endplatten umfassen, die mittels des Spannelements gegeneinander verspannbar sind.

Um dem Brennstoffzellenblockverbund in einfacher Weise ein Fluid (Brenngas, Oxidationsmittel oder Kühlmittel) zuführen oder das Fluid aus dem Brennstoffzellenblockverbund abführen zu können, ist vorteilhafterweise vorgesehen, daß mindestens eine der Endplatten mindestens eine Fluiddurchgangsöffnung aufweist.

Ein Verspannen der Brennstoffzelleneinheiten des Brennstoffzellenblockverbundes gegeneinander mittels eines gesonderten Spannelements ist entbehrlich, wenn vorteilhafterweise vorgesehen ist, daß das Fluidführungselement mindestens einer der Brennstoffzelleneinheiten mit der Kontaktplatte einer benachbarten Brennstoffzelleneinheit durch Umbördelung verbunden ist. Diese Umbördelung reicht dazu aus, um die Brennstoffzelleneinheiten in ihrer Lage relativ zueinander festzulegen.

Gleichwohl kann in einem solchen Fall ein zusätzliches Spannelement dazu verwendet werden, um die Kontaktpressung zwischen den KAE-Einheiten und den Kontaktplatten des Brennstoffzellenblockverbundes zu erzeugen.

Insbesondere kann vorgesehen sein, daß an dem Fluidführungselement mindestens einer der Brennstoffzelleneinheiten ein die Kontaktplatte der benachbarten Brennstoffzelleneinheit umgreifender Bördelfalzbereich ausgebildet ist.

Alternativ hierzu kann auch vorgesehen sein, daß an der Kontaktplatte mindestens einer der Brennstoffzelleneinheiten ein das Fluidführungselement der benachbarten Brennstoffzelleneinheit umgreifender Bördelfalzbereich ausgebildet ist.

Bei einer bevorzugten Ausgestaltung des Brennstoffzellenblockverbundes ist vorgesehen, dass zwischen dem Bördelfalzbereich und der Kontaktplatte der benachbarten Brennstoffzelleneinheit eine elektrisch isolierende Fluidkanaldichtung angeordnet ist. Durch die Umbördelung steht eine solche Fluidkanaldichtung bereits unter dem für eine ausreichende Abdichtung erforderlichen Anpressdruck, ohne dass es hierfür einer Krafteinwirkung eines externen Verspannungssystems bedarf.

Zum Herstellen eines Brennstoffzellenblockverbunds, der eine Mehrzahl erfindungsgemäßer Brennstoffzelleneinheiten umfasst, eignet sich ein Verfahren nach Anspruch 26.

Bei einem solchen Verfahren werden zunächst die Einzelteile Kontaktplatte, KAE-Einheit und Fluidführungselement jeweils einer Brennstoffzelleneinheit zusammengefügt und die Kontaktplatte und das Fluidführungselement, beispielsweise durch Schweißen oder Löten, miteinander verbunden, um die einzelne Brennstoffzelleneinheit zu montieren.

Anschließend erfolgt die Montage des gesamten Brennstoffzellenblockverbunds, bei dem die Brennstoffzelleneinheiten des Brennstoffzellenblockverbunds vorzugsweise mittels mindestens eines Spannelements gegeneinander verspannt werden.

Bei einer besonderen Ausgestaltung des Verfahrens kann vorgesehen sein, dass die Brennstoffzelleneinheiten des Brennstoffzellenblockverbunds zwischen zwei Endplatten angeordnet und die beiden Endplatten gegeneinander verspannt werden.

Das vorstehend beschriebene Verfahren eignet sich zur Herstellung des Brennstoffzellenblockverbunds insbesondere dann, wenn das Fluidführungselement mindestens einer Brennstoffzelleneinheit an der Kontaktplatte einer benachbarten Brennstoffzelleneinheit über eine Flachdichtung oder eine Schiebesitzabdichtung anliegt.

Weitere Merkmale und Vorteile der Erfindung sind Gegenstand der nachfolgenden Beschreibung und zeichnerischen Darstellung von Ausführungsbeispielen. In den Zeichnungen zeigen:
- Fig. 1: eine schematische perspektivische Darstellung einer Brennstoffzellenvorrichtung mit Zuführleitungen und Abführleitungen für das Oxidationsmittel und das Brennstoffgas;
- Fig. 2: einen schematischen Längsschnitt durch einen in dem Gehäuse der Brennstoffzellenvorrichtung aus Fig. 1 angeordneten Brennstoffzellenblockverbund;
- Fig. 3: einen schematischen Längsschnitt durch eine Kathoden-Anoden-Elektrolyt-Einheit mit daran angrenzenden Kontaktplatten;
- Fig. 4: eine schematische perspektivische Explosionsdarstellung zweier in einer Stapelrichtung aufeinanderfolgender Brennstoffzelleneinheiten des Brennstoffzellenblockverbunds aus Fig. 2;
- Fig. 5: eine schematische Draufsicht auf eine Kontaktplatte einer der Brennstoffzelleneinheiten aus Fig. 4;
- Fig. 6: eine schematische Draufsicht auf einen Fluidführungsrahmen einer der Brennstoffzelleneinheiten aus Fig. 4;
- Fig. 7: den rechten Teil eines schematischen Querschnitts durch drei in der Stapelrichtung aufeinanderfolgende Brennstoffzelleneinheiten des Brennstoffzellenblockverbunds aus Fig. 2;
- Fig. 8: den rechten Teil eines schematischen Längs schnitts durch drei längs der Stapelrichtung aufeinanderfolgende Brennstoffzelleneinheiten des Brennstoffzellenblockverbunds aus Fig. 2 bei einer ersten Ausführungsform des Brenn stoffzellenblockverbunds, bei welcher ein Fluidführungsrahmen einer Brennstoffzellenein heit über eine Flachdichtung an einer Kathoden Anoden-Elektrolyt-Einheit (KAE-Einheit) dersel ben Brennstoffzelleneinheit und über eine weitere Flachdichtung an der Kontaktplatte einer benachbarten Brennstoffzelleneinheit anliegt;
- Fig. 9: einen der Fig. 8 entsprechenden schematischen Längsschnitt durch drei längs der Stapelrich tung aufeinanderfolgende Brennstoffzellenein heiten bei einer zweiten Ausführungsform des Brennstoffzellenblockverbunds, bei welcher der Fluidführungsrahmen einer Brennstoffzellenein heit durch Umbördelung mit der Kontaktplatte einer benachbarten Brennstoffzelleneinheit ver bunden ist;
- Fig. 10: einen der Fig. 8 entsprechenden schematischen Längsschnitt durch drei längs der Stapelrichtung aufeinanderfolgende Brennstoffzelleneinheiten bei einer dritten Ausführungsform des Brennstoffzellenblockverbunds, bei welcher der Fluidführungsrahmen einer Brennstoffzelleneinheit durch Umbördelung mit der KAE-Einheit derselben Brennstoffzelleneinheit und ebenfalls durch Umbördelung mit der Kontaktplatte einer benachbarten Brennstoffzelleneinheit verbunden ist;
- Fig. 11: einen der Fig. 8 entsprechenden schematischen Längsschnitt durch drei längs der Stapelrichtung aufeinanderfolgende Brennstoffzelleneinheiten bei einer vierten Ausführungsform des Brennstoffzellenblockverbunds, bei welcher der Fluidführungsrahmen einer Brennstoffzelleneinheit mit der Kontaktplatte einer benachbarten Brennstoffzelleneinheit über eine Schiebesitzabdichtung verbunden ist; und
- Fig. 12: einen der Fig. 8 entsprechenden schematischen Längsschnitt durch drei längs der Stapelrichtung aufeinanderfolgende Brennstoffzelleneinheiten bei einer fünften Ausführungsform des Brennstoffzellenblockverbunds, bei welcher der Fluidführungsrahmen einer Brennstoffzelleneinheit mit der KAE-Einheit derselben Brennstoffzelleneinheit und mit der Kontaktplatte einer benachbarten Brennstoffzelleneinheit über jeweils eine Schiebesitzabdichtung verbunden ist.

Gleiche oder funktional äquivalente Elemente sind in allen Figuren mit denselben Bezugszeichen bezeichnet.

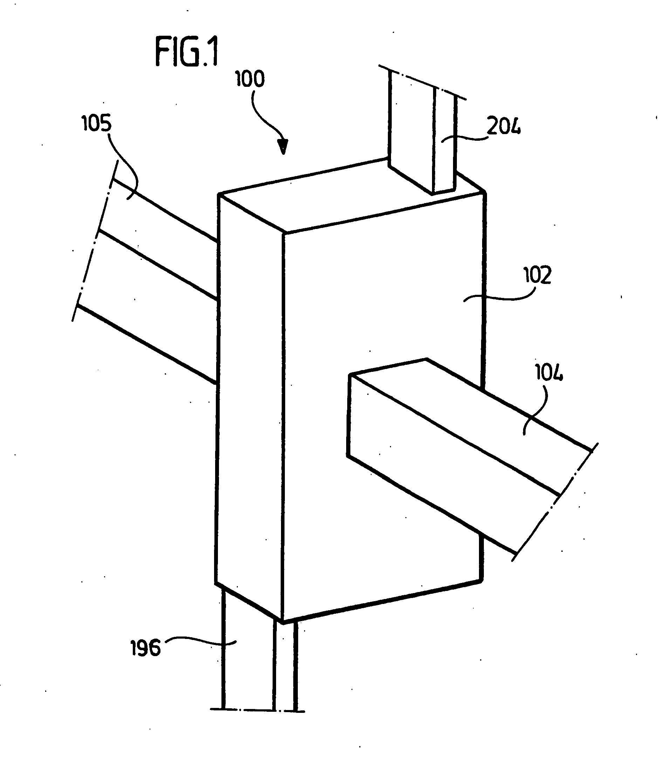

Eine in den Fig. 1 bis 8 dargestellte, als Ganzes mit 100 bezeichnete Brennstoffzellenvorrichtung umfaßt ein im wesentlichen quaderförmiges Gehäuse 102 (siehe Fig. 1), in das eine Oxidationsmittel-Zuführleitung 104 mündet, über die dem Innenraum des Gehäuses 102 ein Oxidationsmittel, beispielsweise Luft oder reiner Sauerstoff, von einem (nicht dargestellten) Zuführgebläse unter einem Überdruck von beispielsweise ungefähr 50 mbar zugeführt wird.

Ferner mündet in das Gehäuse 102 eine Oxidationsmittel-Abführleitung 105, durch welche überschüssiges Oxidationsmittel aus dem Innenraum des Gehäuses 102 abführbar ist.

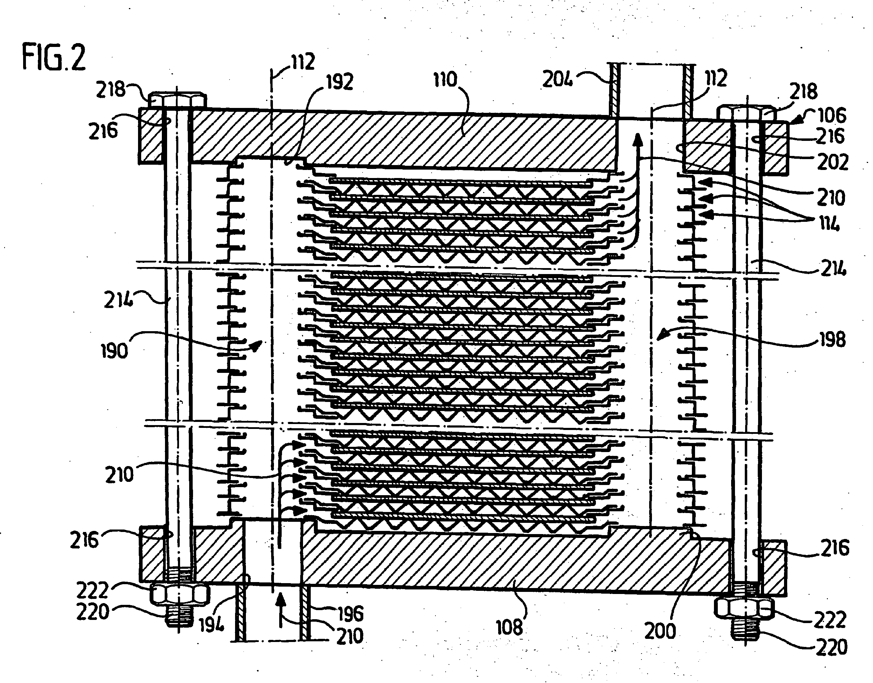

Im Innenraum des Gehäuses 102 ist ein in Fig. 2 als Ganzes dargestellter Brennstoffzellenblockverbund 106 angeordnet, welcher eine untere Endplatte 108, eine obere Endplatte 110 und eine Vielzahl zwischen der unteren Endplatte 108 und der oberen Endplatte 100 angeordneter, längs einer Stapelrichtung 112 aufeinanderfolgender Brennstoffzelleneinheiten 114 umfaßt.

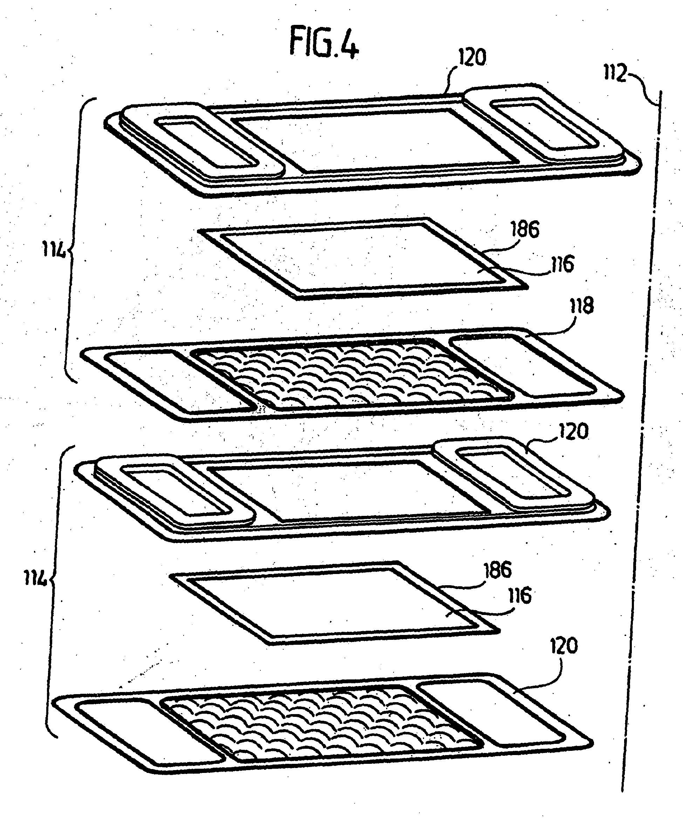

Wie am besten aus Fig. 4 zu ersehen ist, welche eine perspektivische Explosionsdarstellung zweier längs der Stapelrichtung 112 aufeinanderfolgender Brennstoffzelleneinheiten 114 zeigt, umfaßt jede der Brennstoffzelleneinheiten 114 eine im wesentlichen plattenförmige Kathoden-Anoden-Elektrolyt-Einheit 116 (im folgenden kurz: KAE-Einheit), die zwischen einer Kontaktplatte 118 und einem Fluidführungsrahmen 120 gehalten ist.

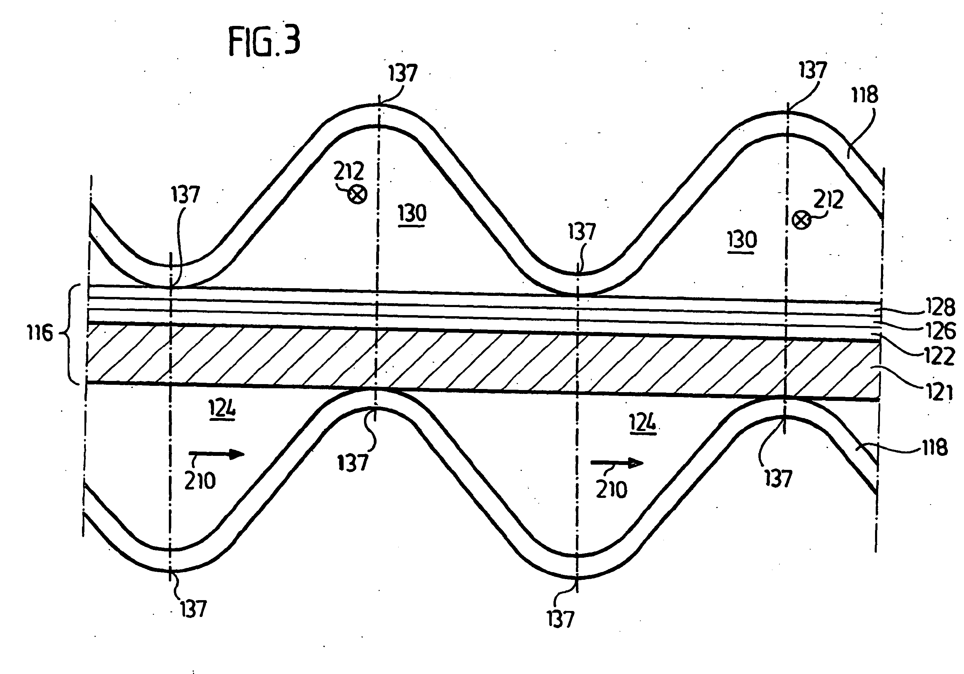

Die KAE-Einheit 116 umfaßt, wie in Fig. 3 rein schematisch dargestellt ist, eine gasdurchlässige, elektrisch leitfähige Trägerschicht 121, die beispielsweise als Gitter oder Netz aus einem metallischen Material, z.B. aus Nickel, ausgebildet sein kann, durch dessen Maschen ein Brenngas aus einem an die Trägerschicht 121 angrenzenden Brenngasraum 124 hindurchtreten kann.

Ferner umfaßt die KAE-Einheit 116 eine auf der Trägerschicht 121 angeordnete plattenförmige Anode 122 aus einem elektrisch leitfähigen keramischen Material, wie beispielsweise Ni-ZrO₂-Cermet (Keramik-Metall-Gemisch), welches porös ist, um dem Brenngas aus dem Brenngasraum 124 den Durchtritt durch die Anode 122 zu dem an die Anode 122 angrenzenden Elektrolyten 126 zu ermöglichen.

Als Brenngas kann beispielsweise ein kohlenwasserstoffhaltiges Gasgemisch oder reiner Wasserstoff verwendet werden.

Der Elektrolyt 126 ist vorzugsweise als Feststoffelektrolyt ausgebildet und beispielsweise aus Yttrium-stabilisiertem Zirkoniumdioxid gebildet.

Auf der der Anode 122 gegenüberliegenden Seite des Elektrolyten 126 grenzt an denselben eine plattenförmige Kathode 128 an, die aus einem elektrisch leitfähigen keramischen Material, beispielsweise aus LaMnO₃, gebildet ist und eine Porosität aufweist, um einem Oxidationsmittel, beispielsweise Luft oder reinem Sauerstoff, aus einem an die Kathode 128 angrenzenden Oxidationsmittelraum 130 den Durchtritt zu dem Elektrolyten 126 zu ermöglichen.

Im Betrieb der Brennstoffzellenvorrichtung 100 weist die KAE-Einheit 116 jeder Brennstoffzelleneinheit 114 eine Temperatur von beispielsweise ungefähr 850°C auf, bei welcher der Elektrolyt 126 für Sauerstoffionen leitfähig ist. Das Oxidationsmittel aus dem Oxidationsmittelraum 130 nimmt an der Anode 122 Elektronen auf und gibt zweiwertige Sauerstoffionen an den Elektrolyten 126 ab, welche durch den Elektrolyten 126 hindurch zur Anode 122 wandern. An der Anode 122 wird das Brenngas aus dem Brenngasraum 124 durch die Sauerstoffionen aus dem Elektrolyten 126 oxidiert und gibt dabei Elektronen an die Anode 122 ab.

Die Kontaktplatten 118 dienen dazu, die bei der Reaktion an der Anode 122 frei werdenden Elektronen von der Anode 122 über die Trägerschicht 121 abzuführen bzw. die für die Reak-tion an der Kathode 128 benötigten Elektronen der Kathode 128 zuzuführen.

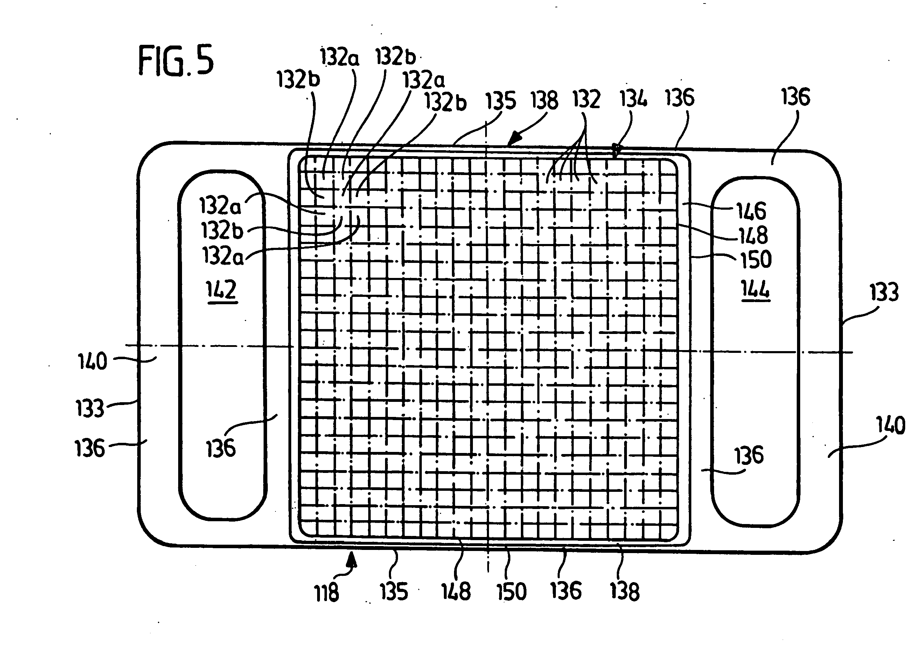

Hierzu besteht jede der Kontaktplatten 118 aus einem elektrisch gut leitfähigen Metallblech, das (wie am besten aus Fig. 5 zu ersehen ist) mit einer Vielzahl von Kontaktelementen 132 versehen ist, welche beispielsweise die Form von aneinander angrenzenden Vorsprüngen und Vertiefungen mit jeweils quadratischem Grundriß aufweisen, welche durch die Überlagerung eines ersten Wellenmusters mit parallel zu den Schmalseiten 133 der Kontaktplatte 118 gerichteten Wellentälern und Wellenbergen und eines zweiten Wellenmusters mit parallel zu den Langseiten 135 der Kontaktplatte 118 gerichteten Wellentälern und Wellenbergen gebildet sind.

Das aus den Kontaktelementen 132 gebildete Kontaktfeld 134 der Kontaktplatte 118 weist somit die Struktur eines in zwei zueinander senkrechten Richtungen gewellten Wellblechs auf.

Die Kontaktelemente 132 sind an der jeweiligen Kontaktplatte 118 in einem Quadratgitter angeordnet, wobei einander benachbarte Kontaktelemente von der Mittelebene 139 der Kontaktplatte 118 aus abwechselnd zu verschiedenen Seiten der Kontaktplatte 118 vorspringen. Die von der Kontaktplatte 118 nach oben und somit zu der Anode 122 der derselben Brennstoffzelleneinheit 114 zugehörigen KAE-Einheit 116 vorspringenden anodenseitigen Kontaktelemente sind mit dem Bezugszeichen 132a, die von der Kontaktplatte 118 aus nach unten und damit zu der Kathode 128 der einer benachbarten Brennstoffzelleneinheit 114 zugehörigen KAE-Einheit 116 vorspringenden kathodenseitigen Kontaktelemente sind mit dem Bezugszeichen 132b bezeichnet.

Die in Fig. 5 eingezeichneten strichpunktierten Linien innerhalb des Kontaktfelds 134 geben die Begrenzungslinien der Kontaktelemente 132 wieder, längs derer die Kontaktplatte 118 ihre Mittelebene 139 schneidet.

Jedes der Kontaktelemente 132 weist einen mittigen Kontaktbereich 137 auf, an dem es mit einer angrenzenden KAE-Einheit 116 in elektrisch leitendem Kontakt steht.

Die Kontaktbereiche 137 der anodenseitigen Kontaktelemente 132a einer Kontaktplatte 118 stehen mit der Trägerschicht 121 und somit mit der Anode 122 der derselben Brennstoffzelleneinheit 114 zugehörigen KAE-Einheit 116 in elektrischem Punktkontakt, so daß Elektronen von der jeweiligen Anode 122 in die Kontaktplatte 118 gelangen können.

Die kathodenseitigen Kontaktelemente 132b der Kontaktplatten 118 stehen mit der Kathode 128 der einer benachbarten Brennstoffzelleneinheit 114 zugehörigen KAE-Einheit 116 in elektrisch leitfähigem Punktkontakt, so daß Elektronen von der Kontaktplatte 118 zu der Kathode 128 gelangen können. Auf diese Weise ermöglichen die Kontaktplatten 118 den Ladungsausgleich zwischen den Anoden 122 und Kathoden 128 längs der Stapelrichtung 112 aufeinanderfolgender KAE-Einheiten 116

Die an den Enden des Brennstoffzellenblockverbunds 106 angeordneten Kontaktplatten 118 sind (auf nicht zeichnerisch dargestellte Weise) mit einem externen Stromkreislauf verbunden, um die an diesen randständigen Kontaktplatten 118 entstehenden elektrischen Ladungen abzugreifen.

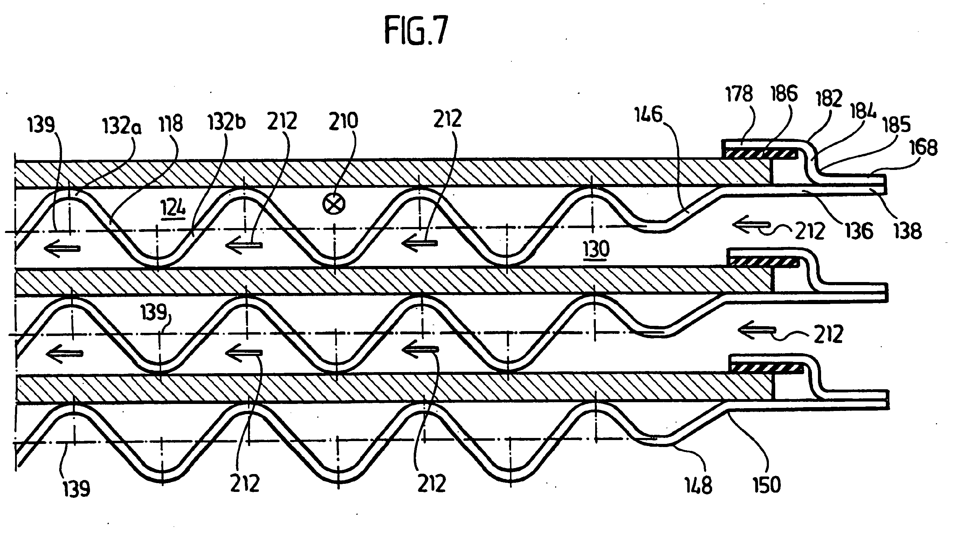

Wie am besten aus der Draufsicht der Fig. 5 zu ersehen ist, ist das mit den Kontaktelementen 132 versehene mittige, rechteckige Kontaktfeld 134 jeder Kontaktplatte 118 von einem ebenen Flanschbereich 136 umgeben, welcher den äußeren Rand der Kontaktplatte 118 bildet und parallel zur Mittelebene 139 des Kontaktfelds 134 ausgerichtet, dieser gegenüber aber zu der KAE-Einheit 116 hin verschoben ist, so daß im Bereich der schmalen Längsseiten 138 des Flanschbereichs 136 die Unterseite der KAE-Einheit 116 auf der Oberseite des Flanschbereichs 136 aufliegt (siehe insbesondere die Fig. 7).

Die breiten Seitenbereiche 140 des Flanschbereichs 136 weisen jeweils eine Durchgangsöffnung 142 bzw. 144 auf, welche den Durchtritt von den Brennstoffzelleneinheiten 114 zuzuführendem Brenngas bzw. von aus den Brennstoffzelleneinheiten 114 abzuführendem Abgas, welches überschüssiges Brenngas und Verbrennungsprodukte, insbesondere Wasser, enthält, ermöglichen.

Der Flanschbereich 136 ist mit dem versetzt hierzu angeordneten Kontaktfeld 134 über eine das Kontaktfeld 134 umgebende Schräge 146 verbunden, welche an einer ersten Biegelinie 148 an das Kontaktfeld 134 und an einer zweiten Biegelinie 150 an den Flanschbereich 136 angrenzt.

Jede der Kontaktplatten 118 ist als Blechformteil ausgebildet, welches aus einer im wesentlichen ebenen, im wesentlichen rechteckigen Blechlage durch Prägen und/oder Tiefziehen sowie durch Ausstanzen oder Ausschneiden der Durchgangsöffnungen 142, 144 gebildet ist.

Auch die Fluidführungsrahmen 120 sind als Blechformteile aus einer im wesentlichen ebenen, im wesentlichen rechteckigen Blechlage gebildet.

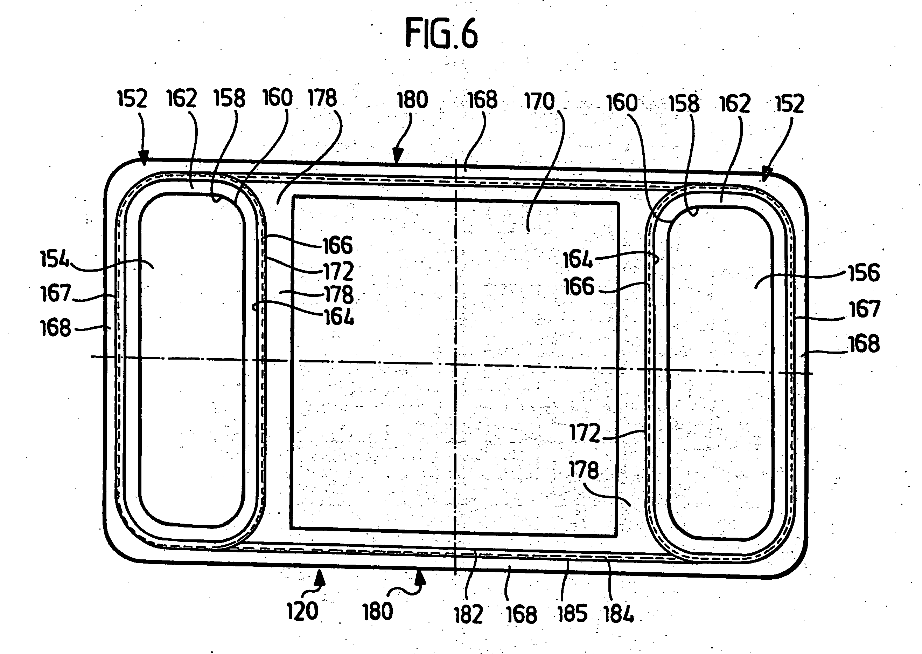

Wie am besten aus Fig. 6 zu ersehen ist, weist jeder Fluidführungsrahmen 120 an seinen Endbereichen 152 den Durchgangsöffnungen 142, 144 in den Kontaktplatten 118 entsprechende Durchgangsöffnungen, nämlich eine Brenngasdurchgangsöffnung 154 und eine Abgasdurchgangsöffnung 156, auf.

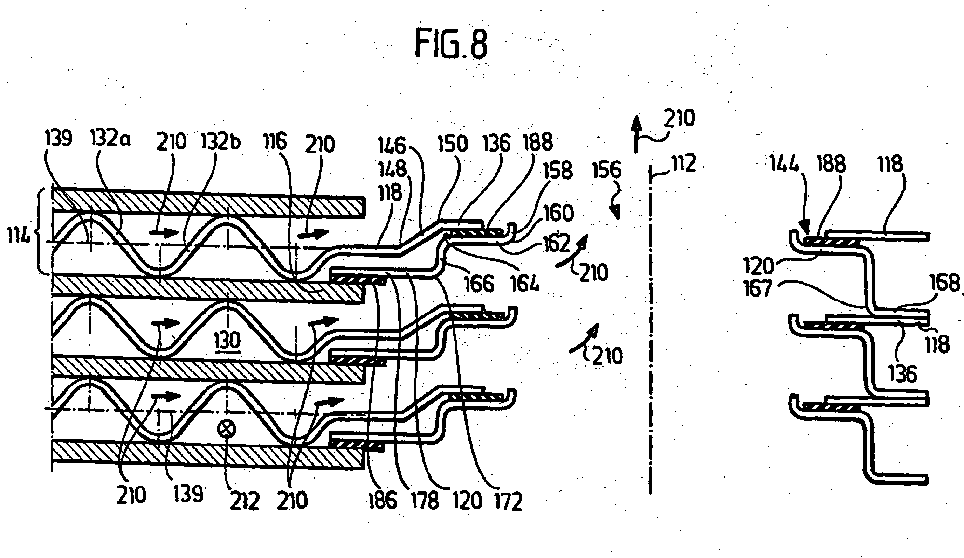

Wie am besten aus den Fig. 6 und 8 zu ersehen ist, ist jede der Durchgangsöffnungen 154, 156 in einem Fluidführungsrahmen 120 von einem sich längs der Stapelrichtung 112 erstreckenden Kragen 158, einem längs einer Biegelinie 160 an den Kragen 158 angrenzenden, sich senkrecht zur Stapelrichtung 112 von der Durchgangsöffnung weg erstreckenden Dichtungsauflagebereich 162 und einem an einer Biegelinie 164 an den Dichtungsauflagebereich 162 angrenzenden, parallel zur Stapelrichtung 112 ausgerichteten Kanalwandbereich 166 umgeben. Dort, wo der Kanalwandbereich 166 an einen äußeren Rand des Rahmens 120 angrenzt, geht er an einer Biegelinie 167 in einen senkrecht zur Stapelrichtung 112 ausgerichteten Flanschbereich 168 über.

Wie am besten aus Fig. 6 zu ersehen ist, weist jeder der Fluidführungsrahmen 120 zwischen den Durchgangsöffnungen 154, 156 in den Endbereichen 152 des Fluidführungsrahmens 120 eine im wesentlichen rechteckige, mittige Durchtrittsöffnung 170 für den Durchtritt der Kontaktelemente 132 der Kontaktplatte 118 einer benachbarten Brennstoffzelleneinheit 114 auf.

Wie aus den Fig. 6 und 8 zu ersehen ist, geht der Kanalwandbereich 166 dort, wo er der Durchtrittsöffnung 170 benachbart ist, an einer Biegelinie 172 in einen senkrecht zur Stapelrichtung 112 ausgerichteten inneren Randbereich 178 des Fluidführungsrahmens 120 über.

Wie am besten aus Fig. 6 zu ersehen ist, erstreckt sich der innere Randbereich 178 des Fluidführungsrahmens 120 rings um die Durchtrittsöffnung 170.

In den schmalen Längsbereichen 180 des Fluidführungsrahmens 120, die zwischen der Durchtrittsöffnung 170 und dem äußeren Rand des Fluidführungsrahmens 120 angeordnet sind und die beiden Endbereiche 152 des Fluidführungsrahmens 120 miteinander verbinden, geht der innere Randbereich 178 an seinem der Durchtrittsöffnung 170 abgewandten Rand längs einer Biegelinie 182 in einen parallel zur Stapelrichtung 112 ausgerichteten vertikalen Wandbereich 184 über, welcher seinerseits längs einer Biegelinie 185 in den den äußeren Rand des Fluidführungsrahmens 120 bildenden Flanschbereich 168 übergeht.

Wie am besten aus den Fig. 4 und 8 zu ersehen ist, ist jede KAE-Einheit 116 am Rand ihrer dem Fluidführungsrahmen 120 derselben Brennstoffzelleneinheit 114 zugewandten Oberseite mit einer gasdichten, elektrisch isolierenden Brenngasraum-Dichtung 186 versehen, die seitlich über die KAE-Einheit 116 übersteht.

Die Brenngasraum-Dichtung kann beispielsweise eine Flachdichtung aus Glimmer umfassen.

Alternativ oder ergänzend hierzu kann auch vorgesehen sein, daß die Brenngasraum-Dichtung 186 eine gasdichte, elektrisch isolierende Beschichtung an der Unterseite des Fluidführungsrahmens 120 umfaßt, die im Siebdruckverfahren oder mittels Walzenbeschichtung auf die Unterseite des inneren Randbereichs 178 des Fluidführungsrahmens 120 aufgebracht wird.

Wie am besten aus Fig. 8 zu ersehen ist, sind die beiden die Durchgangsöffnungen 154, 156 des Fluidführungsrahmens 120 umgebenden Dichtungsauflagebereiche 162 an ihrer der KAE-Einheit 116 abgewandten Oberseite mit jeweils einer Gaskanal-Dichtung 188 versehen.

Auch die Gaskanal-Dichtung 188 umfaßt vorzugsweise eine Flachdichtung aus Glimmer oder eine gasdichte, elektrisch isolierende Beschichtung, die als Paste im Siebdruckverfahren oder mittels Walzenbeschichtung auf den Dichtungsauflagebereich 162 des Fluidführungsrahmens 120 aufgebracht werden kann.

Im montierten Zustand einer Brennstoffzelleneinheit 114 liegt die KAE-Einheit 116 der betreffenden Brennstoffzelleneinheit 114 mit ihrer Trägerschicht 121 auf den anodenseitigen Kontaktelementen 132a der Kontaktplatte 118 der Brennstoffzelleneinheit 114 auf.

Der Fluidführungsrahmen 120 der Brennstoffzelleneinheit 114 liegt seinerseits über die Brenngasraum-Dichtung 186 auf dem äußeren Rand der Kathode 128 der KAE-Einheit 116 und mit dem Flanschbereich 168 auf dem Flanschbereich 136 der Kontaktplatte 118 auf.

Der Flanschbereich 168 und der Flanschbereich 136 sind durch Verschweißung (z.B. im Laserschweißverfahren oder im Elektronenstrahlverfahren) oder durch Verlötung, insbesondere eine Hartlötung, aneinander festgelegt und gasdicht abgedichtet.

Die Brennstoffzelleneinheiten 114 des Brennstoffzellenblockverbunds 106 sind längs der Stapelrichtung 112 so aufeinandergestapelt, daß die kathodenseitigen Kontaktelemente 132b jeder Kontaktplatte 118 sich durch die Durchtrittsöffnung 170 im Fluidführungsrahmen 120 der jeweils darunter angeordneten Brennstoffzelleneinheit 114 zu der Kathode der KAE-Einheit 116 der darunter angeordneten Brennstoffzelleneinheit 114 erstrecken und in elektrisch leitendem Kontakt an derselben anliegen.

Der Flanschbereich 136 jeder Kontaktplatte 118 liegt dabei auf der Gaskanal-Dichtung 188 des Fluidführungsrahmens 120 der jeweils darunter angeordneten Brennstoffzelleneinheit 114 auf, wobei sich der Kragen 158, welcher die Durchgangsöffnung 154 bzw. 156 in dem Fluidführungsrahmen 120 umgibt, in die jeweils entsprechende Durchgangsöffnung 142 bzw. 144 der Kontaktplatte 118 hinein erstreckt.

Der die Brenngasdurchgangsöffnung 154 umgebende Endbereich 152 jedes Fluidführungsrahmens 120 bildet einen Brenngasführungsbereich. Der die Abgasdurchgangsöffnung 156 umgebende Endbereich 152 jedes Fluidführungsrahmens 120 bildet einen Abgasführungsbereich.

Wie am besten aus der Schnittdarstellung der Fig. 2 zu ersehen ist, bilden die längs der Stapelrichtung 112 aufeinanderfolgenden Brenngasführungsbereiche der Fluidführungsrahmen 120 zusammen einen sich parallel zur Stapelrichtung 112 erstreckenden Brenngaskanal 190, der an seinem oberen Ende in einer Ausnehmung 192 an der Unterseite der oberen Endplatte 110 mündet.

An dem unteren Ende des Brenngaskanals 190 mündet in denselben eine Brenngaszuführöffnung 194, welche die untere Endplatte 108 des Brennstoffzellenblockverbunds 106 koaxial zu dem Brenngaskanal 190 durchsetzt.

An das dem Brenngaskanal 190 abgewandte Ende der Brenngaszuführöffnung 194 ist eine Brenngas-Zuführleitung 196 angeschlossen, welche durch das Gehäuse 102 der Brennstoffzellenvorrichtung 100 gasdicht hindurchgeführt und an eine (nicht dargestellte) Brenngaszufuhr angeschlossen ist, welche der Brenngas-Zuführleitung 196 ein Brenngas, beispielsweise ein kohlenwasserstoffhaltiges Gas oder reinen Wasserstoff, unter einem Überdruck von beispielsweise ungefähr 50 mbar zuführt.

Wie ebenfalls am besten aus Fig. 2 zu ersehen ist, bilden die Abgasführungsbereiche der längs der Stapelrichtung 112 aufeinanderfolgenden Fluidführungsrahmen 120 zusammen einen Abgaskanal 198, der parallel zu der Stapelrichtung 112 ausgerichtet ist und an seinem unteren Ende durch einen an der Oberseite der unteren Endplatte 108 des Brennstoffzellenblockverbunds 106 vorgesehenen Vorsprung 200 verschlossen ist.

An seinem oberen Ende mündet der Abgaskanal 198 in eine zu demselben koaxiale Abgasabführöffnung 202, welche die obere Endplatte 110 des Brennstoffzellenblockverbunds 106 durchsetzt und an ihrem dem Abgaskanal 198 abgewandten Ende an eine Abgas-Abführleitung 204 angeschlossen ist.

Die Abgas-Abführleitung 204 ist gasdicht durch das Gehäuse 102 der Brennstoffzellenvorrichtung 100 hindurchgeführt und an eine (nicht dargestellte) Abgasbehandlungseinheit angeschlossen.

Im Betrieb der Brennstoffzellenvorrichtung 100 strömt das Brenngas durch die Brenngas-Zuführleitung 196 und die Brenngaszuführöffnung 194 in den Brenngaskanal 190 ein und verteilt sich von dort durch die Zwischenräume zwischen den Kontaktplatten 118 und den jeweils derselben Brennstoffzelleneinheit 114 zugehörigen Fluidführungsrahmen 120 auf die Brenngasräume 124 der Brennstoffzelleneinheiten 114, welche jeweils durch die Kontaktplatte 118, den Fluidführungsrahmen 120 und die KAE-Einheit 116 der betreffenden Brennstoffzelleneinheit 114 umschlossen sind.

Wie bereits beschrieben, wird das Brenngas zumindest teilweise an der den jeweiligen Brenngasraum 124 begrenzenden Anode 122 der jeweiligen KAE-Einheit 116 oxidiert.

Das Oxidationsprodukt (beispielsweise Wasser) gelangt zusammen mit überschüssigem Brenngas aus den Brenngasräumen 124 der Brennstoffzelleneinheiten 114 in den Abgaskanal 198, aus welchem es durch die Abgasabführöffnung 202 und die Abgas-Abführleitung 204 zu der (nicht dargestellten) Abgasbehandlungseinheit abgeführt wird.

In der Abgasbehandlungseinheit wird beispielsweise das Reaktionsprodukt (beispielsweise Wasser) aus dem Abgasstrom entfernt, und überschüssiges Brenngas wird zu der Brenngaszufuhr geleitet, um nochmals der Brennstoffzellenvorrichtung 100 zugeführt zu werden.

Das für den Betrieb der Brennstoffzellenvorrichtung 100 benötigte Oxidationsmittel (beispielsweise Luft oder reiner Sauerstoff) wird dem Innenraum des Gehäuses 102 durch die Oxidationsmittel-Zuführleitung 104 zugeführt.

Im Innenraum des Gehäuses 102 verteilt sich das Oxidationsmittel auf die zwischen den Brenngasräumen 124 der Brennstoffzelleneinheiten 114 ausgebildeten Oxidationsmittelräume 130, welche durch jeweils eine Kontaktplatte 118 einer Brennstoffzelleneinheit 114 sowie durch den Fluidführungsrahmen 120 und die Kathode 128 der KAE-Einheit 116 einer benachbarten Brennstoffzelleneinheit 114 umschlossen sind.

In die Oxidationsmittelräume hinein und aus denselben wieder heraus gelangt das Oxidationsmittel durch die Zwischenräume zwischen jeweils einem Fluidführungsrahmen 120 einer Brennstoffzelleneinheit 114 und der Kontaktplatte 118 der in der Stapelrichtung 112 darauffolgenden Brennstoffzelleneinheit 114.

Wie bereits beschrieben, werden aus dem Oxidationsmittel an den Kathoden 128 der KAE-Einheiten 116 der Brennstoffzelleneinheiten 114 Sauerstoffionen gebildet, welche durch die Elektrolyten 126 zu den Anoden 122 der KAE-Einheiten 116 der Brennstoffzelleneinheiten 114 wandern.

Überschüssiges Oxidationsmittel gelangt aus den Oxidationsmittelräumen 130 der Brennstoffzelleneinheiten 114 auf der der Eintrittsseite des Oxidationsmittels gegenüberliegenden Austrittsseite hinaus und wird durch die Oxidationsmittel-Abführleitung 105 aus dem Innenraum des Gehäuses 102 der Brennstoffzellenvorrichtung 100 abgeführt.

Die Strömungsrichtung des Brenngases und des Abgases durch die Brennstoffzellenvorrichtung 100 ist in den Zeichnungen mit einfachen Pfeilen 210, die Strömungsrichtung des Oxidationsmittels durch die Brennstoffzellenvorrichtung 100 mittels Doppelpfeilen 212 angegeben.

Die Strömungsrichtung des Oxidationsmittels durch die Oxidationsmittelräume 130 ist im wesentlichen senkrecht zu der Strömungsrichtung des Brenngases durch die Brenngasräume 124.

Um die längs der Stapelrichtung 112 aufeinanderfolgenden Brennstoffzelleneinheiten 114 durch äußere Verspannung aneinander festzulegen, sind mehrere Verbindungsschrauben 214 vorgesehen, welche Durchgangsbohrungen 216 in den Endplatten 108, 110 des Brennstoffzellenblockverbunds 106 durchsetzen und an ihrem dem jeweiligen Schraubenkopf 218 abgewandten Ende mit einem Außengewinde 220 versehen sind, in welches jeweils eine Verbindungsmutter 222 eingedreht ist, so daß die Endplatten 108, 110 zwischen den Schraubenköpfen 218 und den Verbindungsmuttern 222 eingespannt sind und eine gewünschte Preßkraft über die Endplatten 108, 110 auf den Stapel der Brennstoffzelleneinheiten 114 übertragbar ist (siehe Fig. 2).

Die durch die äußere Verspannung mittels der Verbindungsschraubern 214 und Verbindungsmuttern 222 erzeugte Preßkraft bestimmt den Anpreßdruck, mit dem die Flanschbereiche 136 der Kontaktplatten 118 gegen die Gaskanal-Dichtungen 188 an den Fluidführungsrahmen 120 gepreßt werden.

Der Anpreßdruck, mit dem die Fluidführungsrahmen 120 gegen die Brenngasraum-Dichtungen 186 an den KAE-Einheiten 116 gepreßt werden, wird dagegen - unabhängig von der äußeren Verspannung mittels der Verbindungsschrauben 214 und Verbindungsmuttern 222 - ausschließlich durch die elastische Vorspannkraft bestimmt, mit welcher der Fluidführungsrahmen 120 einer Brennstoffzelleneinheit 114 gegen die KAE-Einheit 116 derselben Brennstoffzelleneinheit 114 vorgespannt ist.

Diese elastische Vorspannung wird zu dem Zeitpunkt erzeugt, zu dem der Fluidführungsrahmen 120 und die Kontaktplatte 118 derselben Brennstoffzelleneinheit 114 an den Flanschbereichen 136 bzw. 168 aneinander festgelegt werden. Diese elastische Vorspannkraft hängt von der Geometrie der Brennstoffzelleneinheiten 114 ab und kommt dadurch zustande, daß die Summe der Ausdehnungen eines Kontaktelements 132a und der KAE-Einheit 116 mit der daran angeordneten Brenngasraum-Dichtung 186 in der Stapelrichtung 112 etwas größer ist als der Abstand, den die Unterseite des inneren Randbereichs 178 des Fluidführungsrahmens 120 im unverformten Zustand des Fluidführungsrahmens 120 von der Mittelebene des Kontaktfelds 134 der Kontaktplatte 118 einnehmen würde. Durch die zwischen die Kontaktplatte 118 und den Fluidführungsrahmen 120 geklemmte KAE-Einheit 116 wird der Fluidführungsrahment 120 elastisch verformt, was eine elastische Rückstellkraft zur Folge hat, welche den Fluidführungsrahmen 120 gegen die KAE-Einheit 116 vorspannt.

Der vorstehend beschriebene Brennstoffzellenblockverbund 106 wird wie folgt montiert:

Zunächst werden die einzelnen Brennstoffzelleneinheiten 114 montiert, indem jeweils eine KAE-Einheit 116 zwischen einer Kontaktplatte 118 und einem Fluidführungsrahmen 120 angeordnet wird und anschließend die aneinander anliegenden Flanschbereiche 136 der Kontaktplatte 118 sowie der Flanschbereich 168 des Fluidführungsrahmens 120 gasdicht, beispielsweise durch Verschweißen oder Verlöten, insbesondere Hartlöten, miteinander verbunden werden. Anschließend wird der Brennstoffzellenblockverbühd 106 aus den einzelnen Brennstoffzelleneinheiten 114 zusammengesetzt, indem die gewünschte Anzahl von Brennstoffzelleneinheiten 114 längs der Stapel richtung 112 gestapelt wird und die Brennstoffzelleneinheiten 114 mittels der Endplatten 108, 110 und der die Endplatten gegeneinander verspannenden Verbindungsschrauben 214 und Verbindungsmuttern 222 in ihrer Lage relativ zueinander fixiert werden.

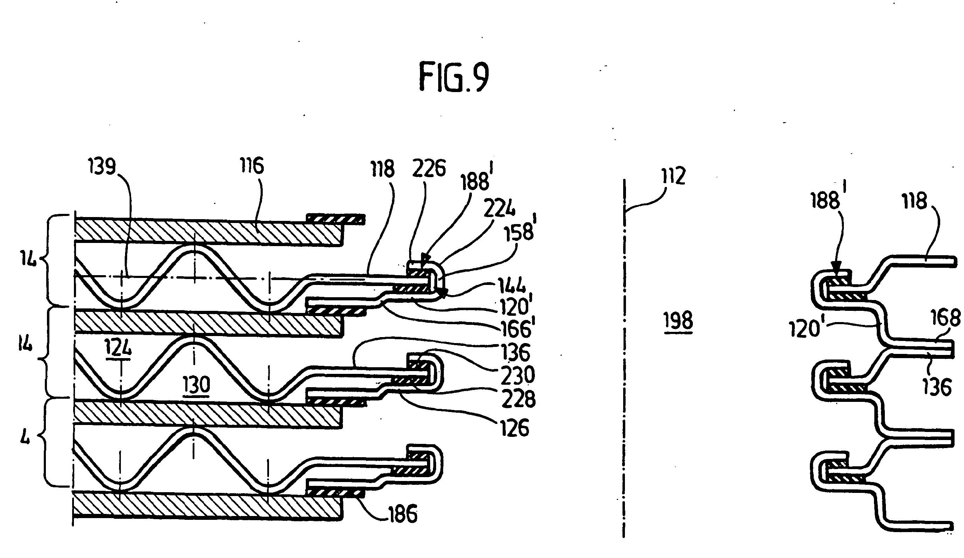

Eine in Fig. 9 dargestellte zweite Ausführungsform einer Brennstoffzellenvorrichtung 100 unterscheidet sich von der vorstehend beschriebenen ersten Ausführungsform dadurch, daß die Kontaktplatten 118 im Bereich der Gaskanal-Dichtungen 188 nicht lediglich an dem Fluidführungsrahmen 120' einer benachbarten Brennstoffzelleneinheit 114 anliegen, sondern vielmehr durch Umbördelung mit diesem Fluidführungsrahmen verbunden sind.

Wie aus Fig. 9 zu ersehen ist, durchgreift der Kragen 158' jedes Fluidführungsrahmens 120' die Abgasdurchgangsöffnung 144 (bzw. die Brenngasdurchgangsöffnung 142) in der Kontaktplatte 118 der benachbarten Brennstoffzelleneinheit 114 und geht an einer Biegelinie 224 in einen senkrecht zu der Stapelrichtung 112 ausgerichteten Bördelfalzbereich 226 über.

Die an der der Kontaktplatte 118 zugewandten Seite des Fluidführungsrahmens 120' angeordnete Gaskanal-Dichtung 188' ist bei dieser zweiten Ausführungsform nicht einteilig, wie bei der vorstehend beschriebenen ersten Ausführungsform, sondern zweiteilig ausgebildet und umfaßt eine erste Flachdichtung 228, die zwischen der Oberseite des Dichtungsauflagebereichs 126 des Fluidführungsrahmens 120' und der Unterseite des Flanschbereiches 136 der Kontaktplatte 118 angeordnet ist, und eine zweite Flachdichtung 230, die zwischen der Unterseite des Bördelfalzbereiches 226 des Fluidführungsrahmens 120' und der Oberseite des Flanschbereiches 136 der Kontaktplatte 118 angeordnet ist.

Die Flachdichtungen 228, 230 können als Glimmerdichtungen oder als gasdichte, elektrisch isolierende Beschichtungen (an der Kontaktplatte 118 oder an dem Fluidführungsrahmen 120') ausgebildet sein.

Der Bördelfalzbereich 226 an dem Fluidführungsrahmen 120' bildet eine Hinterschneidung, durch welche die Kontaktplatte 118 der jeweils benachbarten Brennstoffzelleneinheit 114 an dem Fluidführungsrahmen 120' festgelegt ist.

Um das Spiel zwischen der Kontaktplatte 118 und dem Fluidführungsrahmen 120' senkrecht zur Stapelrichtung 112 zu verringern, kann in dem Zwischenraum zwischen dem Rand des Flanschbereichs 136 der Kontaktplatte und dem Kragen 158' des Fluidführungsrahmens 120' ein Distanzring aus einem elektrisch isolierenden, vorzugsweise keramischen, Material angeordnet werden.

Bei dieser zweiten Ausführungsform wird der zum Abdichten des Abgaskanals 198 bzw. des Brenngaskanals 190 erforderliche Anpreßdruck an der Gaskanal-Dichtung 188' nicht erst durch das äußere Verspannen der Brennstoffzelleneinheiten 114 gegeneinander mittels der Endplatten 108, 110 und der daran angeordneten Verbindungsschrauben 214 und Verbindungsmuttern 222 erzeugt, sondern bereits bei der Montage des Stapels aus Brennstoffzelleneinheiten 114 durch das Umbördeln des Flanschbereichs 136 jeder Kontaktplatte 118 mit dem Fluidführungsrahmen 120' der benachbarten Brennstoffzelleneinheit 114 festgeliegt.

Wie aus Fig. 9 zu ersehen ist, entfällt bei dieser zweiten Ausführungsform die Schräge 146 zwischen dem Kontaktfeld 134 und dem Flanschbereich 136 der Kontaktplatte 118, so daß der Flanschbereich 136 der Kontaktplatte 118 ungefähr auf derselben Höhe wie die Mittelebene 139 der Kontaktplatte 118 liegt. Ferner ist der Kanalwandbereich 166' des Fluidführungerahmens 120' nicht, wie bei der ersten Ausführungsform, parallel zu der Stapelrichtung 112 ausgerichtet, sondern vielmehr unter einem Winkel von ungefähr 45° gegen die Stapelrichtung 112 geneigt. Außerdem ist die Ausdehnung des Kanalwandbereichs 166' längs der Stapelrichtung 112 kleiner als bei der ersten Ausführungsform.

Der Brennstoffzellenblockverbund 106 der zweiten Ausführungsform einer Brennstoffzellenvorrichtung 100 wird vorzugsweise nach dem im folgenden beschriebenen Verfahren hergestellt:

Zunächst werden mehrere Fluidführungselement-Kontaktplatten-Einheiten vormontiert, indem jeweils ein Fluidführungsrahmen 120' einer Brennstoffzelleneinheit 114 mit der Kontaktplatte 118 einer benachbarten Brennstoffzelleneinheit durch Umbördelung im Bereich des Brenngaskanals 190 und des Abgaskanals 198 verbunden wird.

Anschließend wird ein Stapel aus längs der Stapelrichtung 112 aufeinanderfolgenden Fluidführungselement-Kontaktplatten-Einheiten gebildet, wobei jeweils zwischen zwei solchen Einheiten jeweils eine KAE-Einheit so angeordnet wird, daß die Kathode 128 der betreffenden KAE-Einheit 116 über die Brenngasraum-Dichtung 186 an einem Fluidführungsrahmen 120' anliegt.

Ferner wird der Stapel aus den Fluidführungsrahmen-Kontaktplatten-Einheiten so gebildet, daß jede Kontaktplatte 118 mit ihrem Flanschbereich 136 an dem Flanschbereich 168 des Fluidführungsrahmens 120' einer benachbarten Fluidführungsrahmen-Kontaktplatten-Einheit anliegt.

Anschließend werden die Flanschbereiche 136 der Kontaktplatten 118 mit den Flanschbereichen 168 der jeweils derselben Brennstoffzelleneinheit 114 zugehörigen Fluidführungsrahmen 120' gasdicht, beispielsweise durch Verschweißen oder durch Verlöten, insbesondere durch Hartlöten, verbunden.

Im übrigen stimmt die zweite Ausführungsform einer Brennstoffzellenvorrichtung hinsichtlich Aufbau und Funktion mit der ersten Ausführungsform überein, auf deren vorstehende Beschreibung insoweit Bezug genommen wird.

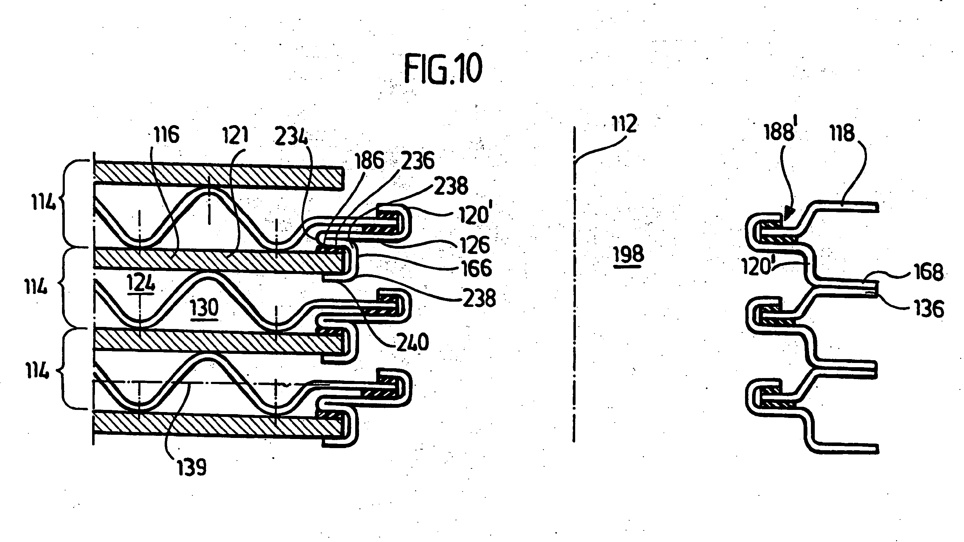

Eine in Fig. 10 dargestellte dritte Ausführungsform einer Brennstoffzollenvorrichtung unterscheidet sich von der vorstehend beschriebenen zweiten Ausführungsform dadurch, daß die Halteplatten im Bereich der Brenngasraum-Dichtung 186 nicht lediglich an den KAE-Einheiten 116 anliegen, sondern vielmehr durch Umbördelung mit diesen KAE-Einheiten 116 verbunden sind.

Wie aus Fig. 10 zu ersehen ist, schließt bei dieser Ausführüngsform an den Dichtungsauflagebereich 126 des Fluidführungsrahmens 120' längs einer Biegelinie 234 ein senkrecht zur Stapelrichtung 112 ausgerichteter Auflagebereich 236 an, welcher mit seiner Oberseite flächig an der Unterseite des Dichtungsauflagebereichs 126 anliegt und seinerseits an einer Biegelinie 238 in einen parallel zur Stapelrichtung 112 ausgerichteten Kanalwandbereich 166 übergeht.

An den unteren Rand des Kanalwandbereichs 166 schließt längs einer Biegelinie 238 ein Bördelfalzbereich 240 an, der senkrecht zu der Stapelrichtung 112 ausgerichtet ist und mit seiner Oberseite an der Unterseite der Trägerschicht 121 der KAE-Einheit 116 anliegt.

Der Bördelfalzbereich 240 an dem Fluidführungsrahmen 120' bildet eine Hinterschneidung, durch welche die KAE-Einheit 116 an dem Fluidführungsrahmen 120' derselben Brennstoffzelleneinheit 114 festgelegt ist.

Bei dieser dritten Ausführungsform wird der zum Abdichten des Brenngasraums 124 erforderliche Anpreßdruck an der Brenngasraum-Dichtung 186 nicht - wie bei den ersten beiden Ausführungsformen - durch die relativen Ausdehnungen der Kontaktelemente 132 und des Fluidführungsrahmens längs der Stapelrichtung 112 bestimmt, sondern unmittelbar durch die Umbördelung der KAE-Einheit 118 durch den Fluidführungsrahmen 120' erzeugt.

Im übrigen stimmt die dritte Ausführungsform einer Brennstoffzellenvorrichtung hinsichtlich Aufbau und Funktion mit der zweiten Ausführungsform überein, auf deren vorstehende Beschreibung insoweit Bezug genommen wird.

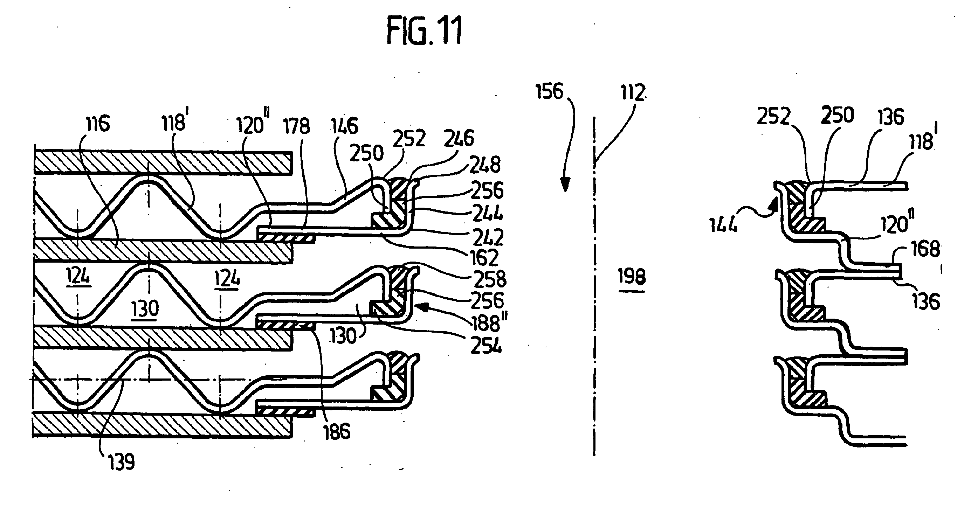

Eine in Fig. 11 dargestellte vierte Ausführungsform einer Brennstoffzellenvorrichtung unterscheidet sich von der vorstehend beschriebenen ersten Ausführungsform dadurch, daß die Gaskanal-Dichtung bei der vierten Ausführungsform nicht - wie bei der ersten Ausführungsform - als mit einer äußeren Spannkraft beaufschlagte Flachdichtung ausgebildet ist, sondern vielmehr als Schiebesitzabdichtung ausgebildet ist.

Wie aus der Schnittdarstellung der Fig. 11 zu ersehen ist, entfällt bei dem Fluidführungsrahmen 120'' der vierten Ausführungsform der parallel zur Stapelrichtung 112 ausgerichtete Kanalwandbereich 166 des Fluidführungsrahmens der ersten Ausführungsform, so daß bei der vierten Ausführungsform der innere Randbereich 178 des Fluidführungsrahmens 120'' ohne Biegelinie direkt in den Dichtungsauflagebereich 162 des Fluidführungsrahmens 120'' übergeht. Der Dichtungsauflagebereich 162 geht an seinem dem inneren Randbereich 178 abgewandten Rand längs einer Biegelinie 242 in einen parallel zu der Stapelrichtung 112 ausgerichteten Kanalwandbereich 244 über, welcher wiederum an seinem dem Dichtungsauflagebereich 162 abgewandten oberen Rand längs einer Biegelinie 246 in einen im wesentlichen senkrecht zur Stapelrichtung 112 augerichteten und in die jeweilige Durchgangsöffnung 154 bzw. 156 hinein gerichteten Schulterbereich 248 übergeht.

Die Kontaktplatte 118' weist im Unterschied zu der Kontaktplatte der ersten Ausführungsform bei dieser vierten Ausführungsform an jeder der Durchgangsöffnungen 142 bzw. 144 einen die betreffende Durchgangsöffnung ringförmig umgebenden, im wesentlichen parallel zu der Stapelrichtung 112 ausgerichteten Kragen 250 auf, welcher längs einer Biegelinie 252 an die jeweils benachbarte Schräge 146 bzw. an den Flanschbereich 136 der Kontaktplatte 118' angrenzt.

Wie aus Fig. 11 zu ersehen ist, ist an der Oberseite des Dichtungsauflagebereichs 162 und an der Außenseite des Kanalwandbereichs 244 jedes Fluidführungsrahmens 120'' jeweils ein den Kanalwandbereich 244 ringförmig umgebendes Distanzelement 252 angeordnet, welches einen im wesentlichen L-förmigen Querschnitt aufweist, mit einem ersten Schenkel 254, welcher auf dem Dichtungsauflagebereich 162 aufliegt und im wesentlichen senkrecht zu der Stapelrichtung 112 ausgerichtet ist, und mit einem zweiten Schenkel 256, welcher an der Außenseite des Kanalwandbereichs 244 anliegt und im wesentlichen parallel zu der Stapelrichtung 112 ausgerichtet ist.

Der erste Schenkel 254 des Distanzelements 252 dient als Abstandshalter zwischen dem Kragen 250 der Kontaktplatte 118' und dem Dichtungsauflagebereich 162 der Halteplatte 120''.

Der zweite Schenkel 256 des Distanzelements 252 dient als Abstandshalter zwischen dem Kragen 250 der Kontaktplatte 118' und dem Kanalwandbereich 244 des Fluidführungsrahmens 120''.

Das Distanzelement 252 besteht aus einem elektrisch isolierenden Material, welches bei der Betriebstemperatur der Brennstoffzellenvorrichtung 100 von beispielsweise ungefähr 850°C fest und beständig ist.

Das Distanzelement 252 kann beispielsweise aus Al₂O₃ gebildet sein.

Der zweite Schenkel 256 des Distanzelements 252 trägt einen den Kanalwandbereich 244 des Fluidführungsrahmens 120'' ringförmig umgebenden Dichtungswulst 256, welcher den Spalt zwischen dem Kanalwandbereich 244 und dem Kragen 250 der Kontaktplatte 118' verschließt.

Der Dichtungswulst 258 besteht aus einem elektrisch nicht leitenden Material, das bei der Betriebstemperatur der Brennstoffzellenvorrichtung 100 von beispielsweise ungefähr 850°C zähflüssig, aber chemisch beständig ist.

Als Material für den Dichtungswulst 256 kommt insbesondere ein Glaslot oder ein glasähnliches, amorphes Material in Betracht.

Wird der Dichtungswulst 258 aus Glaslot gebildet, so kann er durch Auftragen einer Glaspulver enthaltenden Paste hergestellt werde.

Bei Erreichen der Betriebstemperatur der Brennstoffzellenvorrichtung 100 füllt der aufgeschmolzene Dichtungswulst 258 den Spalt zwischen dem Kragen 250 der Kontaktplatte 118' und dem Kanalwandbereich 244 des Fluidführungsrahmens 120'' gasdicht aus.

Eventuelle Druckunterschiede zwischen dem Brenngasraum 124 und dem Oxidationsmittelraum 130 oder unterschiedliche Wärmedehnungen werden durch eine Verschiebung des Kragens 250 der Kontaktplatte 118' relativ zu dem Fluidführungsrahmen 120'' ausgeglichen.

Dies ist ohne weiteres möglich, da die Kontaktplatte 118' und der Fluidführungsrahmen 120'' bei dieser Ausführungsform nicht fest miteinander verbunden sind, sondern vielmehr der Kragen 250 der Kontaktplatte 118' und die Halteplatte 120'' längs der Stapelrichtung 112 gegeneinander verschieblich sind, und zwar um die Strecke, um welche der zweite Schenkel 256 des Distanzelements 252 über dessen ersten Schenkel 254 längs der Stapelrichtung 112 übersteht. Verschiebt sich der Kragen 250 relativ zu dem Fluidführungsrahmen 120'' von der in Fig. 11 dargestellten Ausgangsstellung aus längs der Stapelrichtung 112 nach oben, so sorgt der aufgeschmolzene Dichtungswulst 258 weiterhin für eine gasdichte Abdichtung zwischen der Kontaktplatte 118' und dem Fluidführungsrahmen 120'', während das Distanzelement 252 ein Auslaufen der zähflüssigen Masse des Dichtungswulstes 258 in den Oxidationsmittelraum 130 hinein verhindert.

Die Kontaktplatte 118' und der Fluidführungsrahmen 120'' sind auch senkrecht zu der Stapelrichtung 112 gegeneinander verschieblich, und zwar um die Strecke, um welche der erste Schenkel 254 des Distanzelements 252 über dessen zweiten Schenkel 256 senkrecht zu der Stapelrichtung 112 übersteht. Verschiebt sich der Kragen 250 relativ zu dem Fluidführungsrahmen 120'' von der in Fig. 11 dargestellten Ausgangsstellung aus senkrecht zu der Stapelrichtung 112, so sorgt der aufgeschmolzene Dichtungswulst 258 weiterhin für eine gasdichte Abdichtung zwischen der Kontaktplatte 118' und dem Fluidführungsrahmen 120''.

Eine solche Schiebesitzabdichtung an dem Brenngaskanal 190 und dem Abgaskanal 198 eignet sich insbesondere dazu, Unterschiede zwischen den einzelnen Bestandteilen der Brennstoffzelleneinheiten 114 (KAE-Einheit 116, Kontaktplatte 118' und Fluidführungsrahmen 120'') hinsichtlich deren thermischer Ausdehnungskoeffizienten auszugleichen.

Da für die Schiebesitzabdichtung kein vorgegebener Anpreßdruck erforderlich ist, ist es auch bei dieser vierten Ausführungsform - genauso wie bei der zweiten und der dritten Ausführungsform - nicht erforderlich, die Brennstoffzelleneinheiten 114 des Brennstoffzellenblockverbunds 106 gegeneinander zu verspannen. Es ist lediglich erforderlich, daß die Brennstoffzelleneinheiten in ihrer Lage relativ zueinander fixiert sind und eine ausreichende Kontaktpressung zwischen den KAE-Einheiten und den Kontaktplatten erzeugt wird.

Zur Herstellung des Brennstoffzellenblockverbunds 106 der vierten Ausführungsform wird vorzugsweise - wie bei der ersten Ausführungsform - so vorgegangen, daß zunächst die einzelnen Brennstoffzelleneinheiten 114 durch gasdichtes Verbinden der Kontaktplatte 118' und des Fluidführungsrahmens 120'' derselben Brennstoffzelleneinheit 114 miteinander verbunden werden und anschließend die fertig montierten Brennstoffzelleneinheiten 114 längs der Stapelrichtung 112 aufeinandergestapelt werden.

Im übrigen stimmt die vierte Ausführungsform einer Brennstoffzellenvorrichtung hinsichtlich Aufbau und Funktion mit der ersten Ausführungsform überein, auf deren vorstehende Beschreibung insoweit Bezug genommen wird.

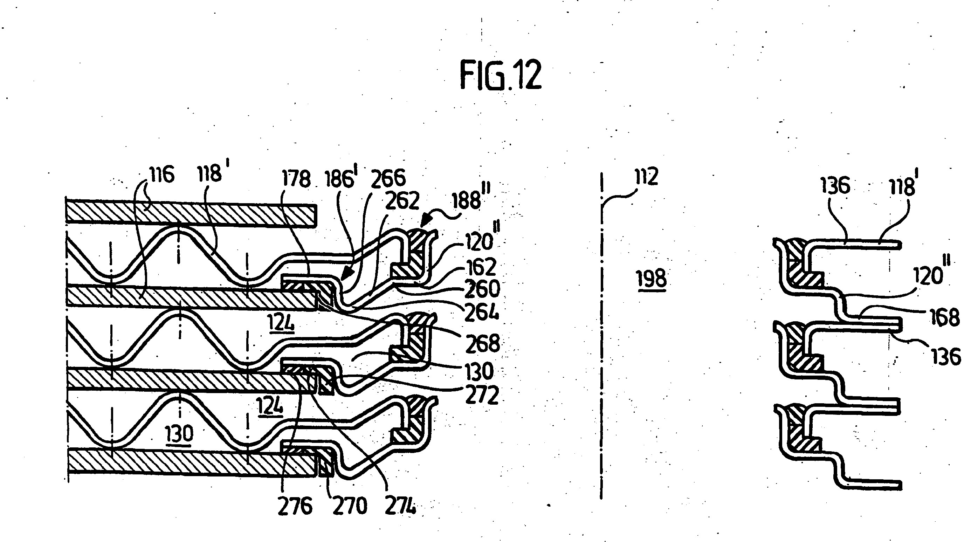

Eine in Fig. 12 dargestellte fünfte Ausführungsform einer Brennstoffzellehvorrichtung unterscheidet sich von der vorstehend beschriebenen vierten Ausführungsform dadurch, daß außer der Gaskanal-Dichtung 188'' bei der vierten Ausführungsform auch die Brenngasraum-Dichtung 186' als Schiebesitzabdichtung ausgebildet ist.

Wie aus der Schnittdarstellung der Fig. 12 zu ersehen ist, grenzt bei dem Fluidführuhgsrahmen 120'' der fünften Ausführungsform an den Dichtungsauflagebereich 162 längs einer Biegelinie 260 ein unter einem Winkel von ungefähr 45° gegen die Stapelrichtung 112 geneigter schräger Wandbereich 262 an, welcher an seinem dem Dichtungsauflagebereich 162 abgewandten unteren Rand längs einer Biegelinie 264 in einen S-förmig gekrümmten Wandbereich 266 übergeht. Der S-förmig gekrümmte Wandbereich 266 grenzt wiederum an seinem dem schrägen Wandbereich 262 abgewandten oberen Rand an den inneren Randbereich 178 des Fluidführungsrahmens 120'' an.

Wie aus Fig. 12 zu ersehen ist, ist an der Unterseite des inneren Randbereichs 178 und an der Seitenwand 268 der KAE-Einheit 116 jeweils ein die KAE-Einheit 116 ringförmig umgebendes Distanzelement 270 angeordnet, welches einen im wesentlichen L-förmigen Querschnitt aufweist, mit einem ersten Schenkel 272, welcher an der Seitenwand 268 der KAE-Einheit 116 anliegt und im wesentlichen parallel zu der Stapelrichtung 112 ausgerichtet ist, und mit einem zweiten Schenkel 274, welcher an der Oberseite der KAE-Einheit 116 und an der Unterseite des inneren Randbereichs 178 des Fluidführungsrahmens 120'' anliegt und im wesentlichen senkrecht zu der Stapelrichtung 112 ausgerichtet ist.

Der erste Schenkel 272 des Distanzelements 270 dient als Abstandshalter zwischen der KAE-Einheit 116 und dem gekrümmten Wandbereich 266 des Fluidführungsrahmens 120''. Der zweite Schenkel 274 des Distanzelements 270 dient als Abstandshalter zwischen dem KAE-Element 116 und dem inneren Randbereich 178 des Fluidführungsrahmens 120''.

Auch das Distanzelement 270 besteht aus einem elektrisch isolierenden Material, welches bei der Betriebstemperatur der Brennstoffzellenvorrichtung 100 von beispielsweise ungefähr 850°C fest und beständig ist, beispielsweise aus Al₂O₃.

Längs des inneren Randes des zweiten Schenkels 274 des Distanzelements 270 ist ein ringförmig geschlossenes Dichtungselement 276 angeordnet, welches aus einem elektrisch nicht leitenden Material besteht, das bei der Betriebstemperatur der Brennstoffzellenvorrichtung 100 von beispielsweise ungefähr 850°C zähflüssig, aber chemisch beständig ist.

Als Material für das Dichtungselement 276 kommt insbesondere ein Glaslot oder ein glasähnliches, amorphes Material in Betracht.

Falls das Dichtungselement 276 aus Glaslot gebildet ist, kann es durch Auftragen einer Glaspulver enthaltenden Paste auf die Oberseite des KAE-Elements 116, beispielsweise im Siebdruckverfahren, hergestellt werden.

Bei Erreichen der Betriebstemperatur der Brennstoffzellenvor.richtung 100 füllt das aufgeschmolzene Dichtungselement 276 den gesamten Zwischenraum zwischen dem inneren Randbereich 178 des Fluidführungsrahmens 120'' und dem KAE-Element 116 gasdicht aus.

Eventuelle Druckunterschiede zwischen dem Brenngasraum 124 und dem Oxidationsmittelraum 130 oder Unterschiede hinsichtlich der Wärmeausdehnung der einzelnen Komponenten der Brennstoffzelleneinheiten 114 werden durch eine Relativverschiebung zwischen der KAE-Einheit 116 und dem Fluidführungsrahmen 120'' ausgeglichen.

Dies ist ohne weiteres möglich, da die KAE-Einheit 116 und der Fluidführungsrahmen 120'' nicht fest miteinander verbunden sind, sondern senkrecht zur Stapelrichtung 112 gegeneinander verschieblich sind, und zwar um die Strecke, um welche der zweite Schenkel 274 des Distanzelements 270 über dessen ersten Schenkel 272 senkrecht zur Stapelrichtung 112 übersteht.

Verschiebt sich die KAE-Einheit 116 relativ zu dem Fluidführungsrahmen 120'' von der in Fig. 12 dargestellten Ausgangsstellung aus senkrecht zur Stapelrichtung 112 nach links, so sorgt das aufgeschmolzene Dichtungselement 276 weiterhin für eine gasdichte Abdichtung zwischen der KAE-Einheit 116 und dem Fluidführungsrahmen 120'', während das Distanzelement 270 ein Auslaufen der zähflüssigen Masse des Dichtungselements 276 in den Brenngasraum 124 hinein verhindert.

Eine solche Schiebesitzabdichtung zwischen dem Brenngasraum 124 und dem Oxidationsmittelraum 130 eignet sich insbesondere dazu, einen Unterschied zwischen den einzelnen Bestandteilen der Brennstoffzelleneinheiten 114 (KAE-Einheit 116, Kontaktplatte 118' und Fluidführungsrahmen 120'') hinsichtlich deren thermischen Ausdehnungskoeffizienten auszugleichen.

Im übrigen stimmt die fünfte Ausführungsform einer Brennstoffzellenvorrichtung hinsichtlich Aufbau und Funktion mit der vierten Ausführungsform überein, auf deren vorstehende Beschreibung insoweit Bezug genommen wird.

## Patentansprüche

1. Brennstoffzelleneinheit, umfassend eine Kathoden-Anoden-Elektrolyt-Einheit (116) und eine Kontaktplatte (118; 118'), die mit der Kathoden-Anoden-Elektrolyt-Einheit (116) in elektrisch leitendem Kontakt steht, wobei die Brennstoffzelleneinheit (114) ein Fluidführungselement (120; 120'; 120") umfasst, das mit mindestens einer Fluiddurchgangsöffnung (154; 156) versehen ist und als Blechformteil ausgebildet ist, wobei das Fluidführungselement (120; 120'; 120") und die Kontaktplatte (118; 118') eine Begrenzung eines im Betrieb der Brennstoffzelleneinheit (114) von einem Brenngas oder von einem Oxidationsmittel durchströmten Fluidraums (124) bilden,
**dadurch gekennzeichnet,**
**dass** das Fluidführungselement (120; 120'; 120") mit der Kontaktplatte (118; 118') durch Verschweißung oder durch Verlötung fluiddicht verbunden ist,
**dass** der Fluidraum (124) außer von dem Fluidführungselement (120; 120'; 120") und von der Kontaktplatte (118; 118') auch von der Kathoden-Anoden-Elektrolyt-Einheit (116) umschlossen wird und
**dass** die Kathoden-Anoden-Elektrolyt-Einheit (116) an dem Fluidführungselement (120; 120'; 120") angeordnet ist.

2. Brennstoffzelleneinheit nach Anspruch 1, **dadurch gekennzeichnet, dass** die Kathoden-Anoden-Elektrolyt-Einheit (116) zwischen dem Fluidführungselement (120; 120'; 120'') und der Kontaktplatte (118; 118') gehalten ist.

3. Brennstoffzelleneinheit nach einem der Ansprüche 1 oder 2, **dadurch gekennzeichnet, dass** die Kontaktplatte (118; 118') als Blechformteil ausgebildet ist.

4. Brennstoffzelleneinheit nach einem der Ansprüche 1 bis 3, **dadurch gekennzeichnet, dass** das Fluidführungselement (120; 120'; 120") und die Kontaktplatte (118; 118') durch Laserverschweißung, durch Elektronenstrahlverschweißung oder durch Hartlötung miteinander verbunden sind.

5. Brennstoffzelleneinheit nach einem der Ansprüche 1 bis 4, **dadurch gekennzeichnet, dass** das Fluidführungselement (120; 120'; 120") eine Durchtrittsöffnung (170) für den Durchtritt von Kontaktelementen (132b) zu der Kathoden-Anoden-Elektrolyt-Einheit (114) aufweist.

6. Brennstoffzelleneinheit nach einem der Ansprüche 1 bis 5, **dadurch gekennzeichnet, dass** das Fluidführungselement (120; 120'; 120") über eine elektrisch isolierende Dichtung (186) an der Kathoden-Anoden-Elektrolyt-Einheit (116) anliegt.

7. Brennstoffzelleneinheit nach Anspruch 6, **dadurch gekennzeichnet, dass** die Dichtung (190) Glimmer umfasst.

8. Brennstoffzelleneinheit nach einem der Ansprüche 6 oder 7, **dadurch gekennzeichnet, dass** die Dichtung (190) eine Flachdichtung umfasst.

9. Brennstoffzelleneinheit nach einem der Ansprüche 6 bis 8, **dadurch gekennzeichnet, dass** die Dichtung (190) eine Beschichtung an dem Fluidführungselement (120; 120'; 120'') und/oder an der Kathoden-Anoden-Elektrolyt-Einheit (116) umfasst.

10. Brennstoffzelleneinheit nach einem der Ansprüche 1 bis 9, **dadurch gekennzeichnet, dass** die Kathoden-Anoden-Elektrolyt-Einheit (116) und das Fluidführungselement (120; 120'; 120'') elastisch gegeneinander vorgespannt sind.

11. Brennstoffzelleneinheit nach einem der Ansprüche 1 bis 10, **dadurch gekennzeichnet, dass** das Fluidführungselement (120; 120'; 120") mit einer Fluidzuführkanalöffnung (154) und mit einer Fluidabführkanalöffnung (156) versehen ist.

12. Brennstoffzelleneinheit nach einem der Ansprüche 1 bis 11, **dadurch gekennzeichnet, dass** die Brennstoffzelleneinheit (114) eine elektrisch isolierende Fluidkanaldichtung (188; 188'; 188") umfasst, über welche die Kontaktplatte (118; 118') der Brennstoffzelleneinheit (114) an dem Fluidführungselement (120; 120'; 120'') einer benachbarten Brennstoffzelleneinheit (114) anliegt.

13. Brennstoffzelleneinheit nach einem der Ansprüche 1 bis 12, **dadurch gekennzeichnet, dass** die Brennstoffzelleneinheit (114) eine Fluidkanaldichtung (188; 188'; 188") umfasst, über welche das Fluidführungselement (120; 120'; 120'') der Brennstoffzelleneinheit (114) an der Kontaktplatte (118; 118') einer benachbarten Brennstoffzelleneinheit (114) anliegt.

14. Brennstoffzelleneinheit nach Anspruch 13, **dadurch gekennzeichnet, dass** die Fluidkanaldichtung (188; 188') eine Beschichtung an dem Fluidführungselement (120; 120') und/oder an der Kontaktplatte (118) umfasst.

15. Brennstoffzelleneinheit nach einem der Ansprüche 13 oder 14, **dadurch gekennzeichnet, dass** die Fluidkanaldichtung (188) eine Flachdichtung umfasst.

16. Brennstoffzelleneinheit nach einem der Ansprüche 13 bis 15, **dadurch gekennzeichnet, dass** die Fluidkanaldichtung (188') mindestens zwei separate Dichtungselemente (228, 230) umfasst.

17. Brennstoffzelleneinheit nach einem der Ansprüche 13 bis 16, **dadurch gekennzeichnet, dass** die Fluidkanaldichtung (188") eine Schiebesitzabdichtung umfasst.

18. Brennstoffzelleneinheit nach einem der Ansprüche 13 bis 17, **dadurch gekennzeichnet, dass** die Fluidkanaldichtung (188; 188'; 188") ein bei der Betriebstemperatur der Brennstoffzelleneinheit (114) zähflüssiges Material, vorzugsweise ein Glaslot, umfasst.

19. Brennstoffzellenblockverbund, umfassend eine Mehrzahl von Brennstoffzelleneinheiten nach einem der Ansprüche 1 bis 18, die längs einer Stapelrichtung (112) aufeinanderfolgen.

20. Brennstoffzellenblockverbund nach Anspruch 19, **dadurch gekennzeichnet, dass** der Brennstoffzellenblockverbund (106) mindestens ein Spannelement zum Verspannen der Brennstoffzelleneinheiten (114) gegeneinander umfasst.

21. Brennstoffzellenblockverbund nach Anspruch 20, **dadurch gekennzeichnet, dass** der Brennstoffzellenblockverbund (106) zwei Endplatten (108; 110) umfasst, die mittels des Spannelements gegeneinander verspannbar sind.

22. Brennstoffzellenblockverbund nach Anspruch 21, **dadurch gekennzeichnet, dass** mindestens eine der Endplatten (108, 110) mindestens eine Fluiddurchgangsöffnung (194, 202) aufweist.

23. Brennstoffzellenblockverbund nach einem der Ansprüche 19 bis 22, **dadurch gekennzeichnet, dass** das Fluidführungselement (120') mindestens einer der Brennstoffzelleneinheiten (114) mit der Kontaktplatte (118) einer benachbarten Brennstoffzelleneinheit (114) durch Umbördelung verbunden ist.

24. Brennstoffzellenblockverbund nach Anspruch 23, **dadurch gekennzeichnet, dass** an dem Fluidführungselement (120') mindestens einer der Brennstoffzelleneinheiten (114) ein die Kontaktplatte (118) der benachbarten Brennstoffzelleneinheit (114) umgreifender Bördelfalzbereich (226) ausgebildet ist.

25. Brennstoffzellenblockverbund nach Anspruch 24, **dadurch gekennzeichnet, dass** zwischen dem Bördelfalzbereich (226) und der Kontaktplatte (118) der benachbarten Brennstoffzelleneinheit (114) eine elektrisch isolierende Fluidkanaldichtung (188') angeordnet ist.

26. Verfahren zum Herstellen eines Brennstoffzellenblockverbunds (106), der eine Mehrzahl von Brennstoffzelleneinheiten (114) nach einem der Ansprüche 1 bis 18 umfasst, umfassend die folgenden Verfahrensschritte:
- Montage der einzelnen Brennstoffzelleneinheiten (114) durch Anordnen einer Kathoden-Anoden-Elektrolyt-Einheit (116) zwischen einer Kontaktplatte (118; 118') und einem Fluidführungselement (120; 120"), das mit mindestens einer Fluiddurchgangsöffnung (154; 156) versehen ist, und fluiddichtes Verbinden der Kontaktplatte (118; 118') mit dem Fluidführungselement (120; 120") durch Verschweißung oder durch Verlötung derart, dass das Fluidführungselement (120; 120") und die Kontaktplatte (118; 118') eine Begrenzung eines im Betrieb des Brennstoffzellenblockverbunds (106) von einem Brenngas oder von einem Oxidationsmittel durchströmten Fluidraums (124) bilden, der außer von dem Fluidführungselement (120; 120") und von der Kontaktplatte (118; 118') auch von der Kathoden-Anoden-Elektrolyt-Einheit (116) umschlossen wird;
- anschließende Montage des Brennstoffzellenblockverbunds (106) durch Anordnen einer Mehrzahl von Brennstoffzelleneinheiten (114) längs einer Stapelrichtung (112) und Fixieren der Brennstoffzelleneinheiten (114) in ihrer Lage relativ zueinander.

27. Verfahren nach Anspruch 26, **dadurch gekennzeichnet, dass** die Brennstoffzelleneinheiten (114) des Brennstoffzellenblockverbunds (106) mittels mindestens eines Spannelements gegeneinander verspannt werden.

28. Verfahren nach Anspruch 27, **dadurch gekennzeichnet, dass** die Brennstoffzelleneinheiten (114) des Brennstoffzellenblockverbunds (106) zwischen zwei Endplatten (108, 110) angeordnet und die beiden Endplatten gegeneinander verspannt werden.

29. Verfahren nach einem der Ansprüche 26 bis 28, **dadurch gekennzeichnet, dass** das Fluidführungselement (120; 120") mindestens einer Brennstoffzelleneinheit (114) an der Kontaktplatte (118; 118') einer benachbarten Brennstoffzelleneinheit (114) über eine Flachdichtung oder eine Schiebesitzabdichtung anliegt.

## Claims

1. Fuel cell unit, comprising a cathode-anode-electrolyte unit (116) and a contact plate (118; 118') in electrically conductive contact with the cathode-anode-electrolyte unit (116), wherein the fuel cell unit (114) comprises a fluid guiding element (120; 120'; 120") provided with at least one fluid port (154; 156) and being designed as a shaped sheet metal part, wherein the fluid guiding element (120; 120'; 120") and the contact plate (118; 118') form a boundary of a fluid chamber (124) having a combustible gas or an oxidizing agent flowing through it during operation of the fuel cell unit (114),
**characterized in that**
the fluid guiding element (120; 120'; 120") is connected to the contact plate (118; 118') in a fluid-tight manner by welding or by soldering, that apart from the fluid guiding element (120; 120'; 120") and the contact plate (118; 118') the fluid chamber (124) is also surrounded by the cathode-anode-electrolyte unit (116) and
that the cathode-anode-electrolyte unit (116) is arranged on the fluid guiding element (120; 120'; 120").

2. Fuel cell unit as defined in claim 1, **characterized in that** the cathode-anode-electrolyte unit (116) is held between the fluid guiding element (120; 120'; 120") and the contact plate (118; 118').

3. Fuel cell unit as defined in either one of claims 1 or 2, **characterized in that** the contact plate (118; 118') is designed as a shaped sheet metal part.

4. Fuel cell unit as defined in any one of claims 1 to 3, **characterized in that** the fluid guiding element (120; 120'; 120") and the contact plate (118; 118') are connected to one another by laser welding, by electron beam welding or by hard soldering.

5. Fuel cell unit as defined in any one of claims 1 to 4, **characterized in that** the fluid guiding element (120; 120'; 120") has an opening (170) for the passage of contact elements (132b) to the cathode-anode-electrolyte unit (114).

6. Fuel cell unit as defined in any one of claims 1 to 5, **characterized in that** the fluid guiding element (120; 120'; 120") abuts on the cathode-anode-electrolyte unit (116) via an electrically insulating seal (186).

7. Fuel cell unit as defined in claim 6, **characterized in that** the seal (190) comprises mica.

8. Fuel cell unit as defined in either one of claims 6 or 7, **characterized in that** the seal (190) comprises a flat seal.

9. Fuel cell unit as defined in any one of claims 6 to 8, **characterized in that** the seal (190) comprises a coating on the fluid guiding element (120; 120'; 120") and/or on the cathode-anode-electrolyte unit (116).

10. Fuel cell unit as defined in any one of claims 1 to 9, **characterized in that** the cathode-anode-electrolyte unit (116) and the fluid guiding element (120; 120'; 120") are biased elastically against one another.

11. Fuel cell unit as defined in any one of claims 1 to 10, **characterized in that** the fluid guiding element (120; 120'; 120") is provided with a fluid supply channel opening (154) and with a fluid discharge channel opening (156).

12. Fuel cell unit as defined in any one of claims 1 to 11, **characterized in that** the fuel cell unit (114) comprises an electrically insulating fluid channel seal (188; 188'; 188"), the contact plate (118; 118') of the fuel cell unit (114) abutting on the fluid guiding element (120; 120'; 120") of an adjacent fuel cell unit (114) via said seal.

13. Fuel cell unit as defined in any one of claims 1 to 12, **characterized in that** the fuel cell unit (114) comprises a fluid channel seal (188; 188'; 188"), the fluid guiding element (120; 120'; 120") of the fuel cell unit (114) abutting on the contact plate (118; 118') of an adjacent fuel cell unit (114) via said seal.

14. Fuel cell unit as defined in claim 13, **characterized in that** the fluid channel seal (188; 188') comprises a coating on the fluid guiding element (120; 120') and/or on the contact plate (118).

15. Fuel cell unit as defined in either one of claims 13 or 14, **characterized in that** the fluid channel seal (188) comprises a flat seal.

16. Fuel cell unit as defined in any one of claims 13 to 15, **characterized in that** the fluid channel seal (188') comprises at least two separate sealing elements (228, 230).

17. Fuel cell unit as defined in any one of claims 13 to 16, **characterized in that** the fluid channel seal (188") comprises a slide fit sealing.

18. Fuel cell unit as defined in any one of claims 13 to 17, **characterized in that** the fluid channel seal (188; 188'; 188") comprises a material, preferably a solder glass, viscous at the operating temperature of the fuel cell unit (114).

19. Fuel cell stack assembly, comprising a plurality of fuel cell units as defined in any one of claims 1 to 18, said units following one another along a stacking direction (112).

20. Fuel cell stack assembly as defined in claim 19, **characterized in that** the fuel cell stack assembly (106) comprises at least one clamping element for bracing the fuel cell units (114) against one another.

21. Fuel cell stack assembly as defined in claim 20, **characterized in that** the fuel cell stack assembly (106) comprises two end plates (108; 110) adapted to be braced against one another by means of the clamping element.

22. Fuel cell stack assembly as defined in claim 21, **characterized in that** at least one of the end plates (108, 110) has at least one fluid port (194, 202).

23. Fuel cell stack assembly as defined in any one of claims 19 to 22, **characterized in that** the fluid guiding element (120') of at least one of the fuel cell units (114) is connected to the contact plate (118) of an adjacent fuel cell unit (114) by way of flanging.

24. Fuel cell stack assembly as defined in claim 23, **characterized in that** a flange fold area (226) engaging around the contact plate (118) of the adjacent fuel cell unit (114) is formed on the fluid guiding element (120') of at least one of the fuel cell units (114).

25. Fuel cell stack assembly as defined in claim 24, **characterized in that** an electrically insulating fluid channel seal (188') is arranged between the flange fold area (226) and the contact plate (118) of the adjacent fuel cell unit (114).

26. Method of manufacturing a fuel cell stack assembly (106) having a plurality of fuel cell units (114) as defined in any one of claims 1 to 18, comprising the following method steps:
- Assembly of the individual fuel cell units (114) by arranging a cathode-anode-electrolyte unit (116) between a contact plate (118; 118') and a fluid guiding element (120; 120") provided with at least one fluid port (154; 156) and fluid-tight connection of the contact plate (118; 118') to the fluid guiding element (120; 120") by welding or by soldering in such a manner that the fluid guiding element (120; 120") and the contact plate (118; 118') form a boundary of a fluid chamber (124) having a combustible gas or an oxidizing agent flowing through it during operation of the fuel cell stack assembly (106), said fluid chamber also being surrounded by the cathode-anode-electrolyte unit (116) in addition to the fluid guiding element (120; 120") and the contact plate (118; 118');
- subsequent assembly of the fuel cell stack assembly (106) by arranging a plurality of fuel cell units (114) along a stacking direction (112) and fixing the fuel cell units (114) in their position relative to one another.

27. Method as defined in claim 26, **characterized in that** the fuel cell units (114) of the fuel cell stack assembly (106) are braced against one another by at least one clamping element.

28. Method as defined in claim 27, **characterized in that** the fuel cell units (114) of the fuel cell stack assembly (106) are arranged between two end plates (108, 110) and the two end plates are braced against one another.

29. Method as defined in any one of claims 26 to 28, **characterized in that** the fluid guiding element (120; 120") of at least one fuel cell unit (114) abuts on the contact plate (118; 118') of an adjacent fuel cell unit (114) via a flat seal or a slide fit sealing.

## Revendications

1. Unité de pile à combustible, comprenant une unité cathode/anode/électrolyte (116) et une plaque de contact (118 ; 118') qui se trouve en contact électriquement conducteur avec l'unité cathode/anode/électrolyte (116), l'unité de pile à combustible (114) comprenant un élément de guidage de fluide (120 ; 120' ; 120") muni d'au moins un orifice de passage de fluide (154 ; 156) et réalisé sous la forme d'une pièce préformée en tôle, ledit élément de guidage de fluide (120 ; 120' ; 120") et ladite plaque de contact (118 ; 118') constituant une limite à un espace de fluide (124) traversé en cours de fonctionnement de l'unité de pile à combustible (114) par un gaz combustible ou d'un oxydant,
**caractérisée en ce que**
l'élément de guidage de fluide (120 ; 120' ; 120") est relié à la plaque de contact (118 ; 118') par soudage ou brasage de façon étanche aux fluides,
l'espace de fluide (124) est entouré non seulement de l'élément de guidage de fluide (120 ; 120' ; 120") et de la plaque de contact (118 ; 118') mais également de l'unité cathode/anode/électrolyte (116), et
l'unité cathode/anode/électrolyte (116) est disposée sur l'élément de guidage de fluide (120 ; 120' ; 120").

2. Unité de pile à combustible selon la revendication 1, **caractérisée en ce que** l'unité cathode/anode/électrolyte (116) est maintenue entre l'élément de guidage de fluide (120 ; 120' ; 120") et la plaque de contact (118 ; 118').

3. Unité de pile à combustible selon l'une quelconque des revendications 1 ou 2, **caractérisée en ce que** la plaque de contact (118 ; 118') est réalisée comme une pièce préformée en tôle.

4. Unité de pile à combustible selon l'une quelconque des revendications 1 à 3, **caractérisée en ce que** l'élément de guidage de fluide (120 ; 120' ; 120") et la plaque de contact (118 ; 118') sont reliés ensemble par soudage au laser, par soudage par faisceau d'électrons ou par brasage fort.

5. Unité de pile à combustible selon l'une quelconque des revendications 1 à 4, **caractérisée en ce que** l'élément de guidage de fluide (120 ; 120' ; 120") présente un orifice de passage (170) pour le passage d'éléments de contact (132b) vers l'unité cathode/anode/électrolyte (114).

6. Unité de pile à combustible selon l'une quelconque des revendications 1 à 5, **caractérisée en ce que** l'élément de guidage de fluide (120 ; 120' ; 120") s'applique contre l'unité cathode/anode électrolyte (116) par l'intermédiaire d'un joint d'isolation électrique (186).

7. Unité de pile à combustible selon la revendication 6, **caractérisée en ce que** le joint (190) comprend du mica.

8. Unité de pile à combustible selon l'une quelconque des revendications 6 ou 7, **caractérisée en ce que** le joint (190) comprend un joint plat.

9. Unité de pile à combustible selon l'une quelconque des revendications 6 à 8, **caractérisée en ce que** le joint (190) comprend un revêtement au niveau de l'élément de guidage de fluide (120 ; 120' ; 120") et/ou de l'unité cathode/anode/électrolyte (116).

10. Unité de pile à combustible selon l'une quelconque des revendications 1 à 9, **caractérisée en ce que** l'unité cathode/anode/électrolyte (116) et l'élément de guidage de fluide (120 ; 120' ; 120") sont précontraints élastiquement l'un contre l'autre.

11. Unité de pile à combustible selon l'une quelconque des revendications 1 à 10, **caractérisée en ce que** l'élément de guidage de fluide (120 ; 120' ; 120") est muni d'un orifice de canal d'amenée de fluide (154) et d'un orifice de canal d'évacuation de fluide (156).

12. Unité de pile à combustible selon l'une quelconque des revendications 1 à 11, **caractérisée en ce que** l'unité de pile à combustible (114) comprend un joint d'étanchéité de canal de fluide d'isolation électrique (188 ; 188' ; 188") par lequel la plaque de contact (118 ; 118') de l'unité de pile à combustible (114) s'applique contre l'élément de guidage de fluide (120 ; 120' ; 120") d'une unité de pile à combustible (114) voisine.

13. Unité de pile à combustible selon l'une quelconque des revendications 1 à 12, **caractérisée en ce que** l'unité de pile à combustible (114) comprend un joint d'étanchéité de canal de fluide (188 ; 188' ; 188") par lequel l'élément de guidage de fluide (120 ; 120' ; 120" ) de l'unité de pile à combustible (114) s'applique contre la plaque de contact (118 ; 118') d'une unité de pile à combustible (114) voisine.

14. Unité de pile à combustible selon la revendication 13, **caractérisée en ce que** le joint d'étanchéité de canal de fluide (188 ; 188') comprend un revêtement au niveau de l'élément de guidage de fluide (120 ; 120') et/ou de la plaque de contact (118).

15. Unité de pile à combustible selon l'une quelconque des revendications 13 ou 14, **caractérisée en ce que** le joint d'étanchéité de canal de fluide (188) comprend un joint plat.

16. Unité de pile à combustible selon l'une quelconque des revendications 13 à 15, **caractérisée en ce que** le joint d'étanchéité de canal de fluide (188') comprend au moins deux éléments d'étanchéité (228, 230) séparés.

17. Unité de pile à combustible selon l'une quelconque des revendications 13 à 16, **caractérisée en ce que** le joint d'étanchéité de canal de fluide (188") comprend un joint à ajustement appuyé.

18. Unité de pile à combustible selon l'une quelconque des revendications 13 à 17, **caractérisée en ce que** le joint d'étanchéité de canal de fluide (188 ; 188' ; 188") comprend un matériau visqueux à la température de service de l'unité de pile à combustible (114), de préférence du verre de scellement.

19. Assemblage de bloc de piles à combustible, comprenant une pluralité d'unités de pile à combustible selon l'une quelconque des revendications 1 à 18, qui se succèdent dans une direction d'empilage (112).

20. Assemblage de bloc de piles à combustible selon la revendication 19, **caractérisé en ce que** l'assemblage de bloc de piles à combustible (106) comprend au moins un élément de serrage pour serrer les unités de pile à combustible (114) les unes contre les autres.

21. Assemblage de bloc de piles à combustible selon la revendication 20, **caractérisé en ce que** l'assemblage de bloc de piles à combustible (106) comprend deux plaques d'extrémité (108 ; 110) pouvant être serrées l'une contre l'autre au moyen de l'élément de serrage.

22. Assemblage de bloc de piles à combustible selon la revendication 21, **caractérisé en ce qu'**au moins l'une des plaques d'extrémité (108, 110) présente au moins un orifice de passage de fluide (194, 202).

23. Assemblage de bloc de piles à combustible selon l'une quelconque des revendications 19 à 22, **caractérisé en ce que** l'élément de guidage de fluide (120') d'au moins l'une des unités de pile à combustible (114) est relié à la plaque de contact (1180 d'une unité de pile à combustible (114) voisine par un bordage.

24. Assemblage de bloc de piles à combustible selon la revendication 23, **caractérisé en ce que** sur l'élément de guidage de fluide (120') d'au moins l'une des unités de pile à combustible (114) est réalisée une zone à bord rabattu (226) entourant la plaque de contact (118) de l'unité de pile à combustible (114) voisine.

25. Assemblage de bloc de piles à combustible selon la revendication 24, **caractérisé en ce qu'**entre la zone à bord rabattu (226) et la plaque de contact (118) de l'unité de pile à combustible (114) voisine, est agencé un joint d'étanchéité de canal de fluide (188') d'isolation électrique.

26. Procédé de fabrication d'un assemblage de bloc de piles à combustibles (106), comprenant une pluralité d'unités de pile à combustible (114) selon l'une quelconque des revendications 1 à 18, comprenant les étapes de procédé suivantes :
■ monter lesdites unités de pile à combustible (114) individuelles en agençant une unité cathode/anode/électrolyte (116) entre une plaque de contact (118 ; 118') et un élément de guidage de fluide (120 ; 120") muni d'au moins un orifice de passage de fluide (154 ; 156), et relier de façon étanche aux fluides la plaque de contact (118 ; 118') à l'élément de guidage de fluide (120 ; 120") par soudage ou brasage de telle sorte que l'élément de guidage de fluide (120 ; 120") et la plaque de contact (118 ; 118') constituent une limite à un espace de fluide (124) traversé en cours de fonctionnement de l'assemblage de bloc de piles à combustibles (106) par un gaz combustible ou un oxydant et entouré non seulement de l'élément de guidage de fluide (120 ; 120") et de la plaque de contact (118 ; 118') mais également de l'unité cathode/anode/électrolyte (116) ;
■ monter ensuite l'assemblage de bloc de piles à combustibles (106) en agençant une pluralité d'unités de pile à combustible (114) dans une direction d'empilage (112) et fixer les unités de pile à combustible (114) dans leur position les unes par rapport aux autres.

27. Procédé selon la revendication 26, **caractérisé en ce que** les unités de pile à combustible (114) de l'assemblage de bloc de piles à combustibles (106) sont serrées les unes contre les autres au moyen d'au moins un élément de serrage.

28. Procédé selon la revendication 27, **caractérisé en ce que** l'unité de pile à combustible (114) de l'assemblage de bloc de piles à combustibles (106) est disposée entre deux plaques d'extrémité (108, 110) et que les deux plaques d'extrémité sont serrées l'une contre l'autre.

29. Procédé selon l'une quelconque des revendications 26 à 28, **caractérisé en ce que** l'élément de guidage de fluide (120 ; 120") d'au moins une unité de pile à combustible (114) s'applique contre la plaque de contact (118 ; 118') d'une unité de pile à combustible (114) voisine par l'intermédiaire d'un joint plat ou d'un joint à ajustement appuyé.
